(19) **Europäisches Patentamt / European Patent Office / Office européen des brevets**

(11) **EP 4 668 941 A1**

(12) **EUROPEAN PATENT APPLICATION**
published in accordance with Art. 153(4) EPC

(43) Date of publication:
**24.12.2025 Bulletin 2025/52**

(21) Application number: **23921803.5**

(22) Date of filing: **15.02.2023**

(51) International Patent Classification (IPC):
**H04W 72/0446** (2023.01)

(52) Cooperative Patent Classification (CPC):
**H04W 72/0446**

(86) International application number:
**PCT/CN2023/076307**

(87) International publication number:
**WO 2024/168640 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **XU, Jing**
**Dongguan, Guangdong 523860 (CN)**

(74) Representative: **Taor, Simon Edward William et al**
**Venner Shipley LLP**
**200 Aldersgate**
**London EC1A 4HD (GB)**

(54) **TRANSMISSION METHOD AND APPARATUS, DEVICE, STORAGE MEDIUM, AND PRODUCT**

(57)    This disclosure discloses a transmission method and apparatus, a device, a storage medium, and a product, and relates to the field of communication technology. The method includes the following. A time-domain unit configured for a first transmission is determined. The time-domain unit configured for the first transmission contains one type of time-domain unit. In this method, when one or more types of time-domain unit exist, the one type of time-domain unit for the first transmission is determined based on the time-domain unit configured for the first transmission. As such, during the first transmission, the transmission can be performed according to the determined one type of time-domain unit, thereby avoiding failure of the first transmission due to inconsistent understanding between a terminal device and a network device when multiple types of time-domain unit exist at the same time.

DETERMINE TIME-DOMAIN UNIT CONFIGURED FOR FIRST TRANSMISSION    220

FIG. 5

**Description**

TECHNICAL FIELD

This disclosure relates to the field of communication technology, and in particular, to a transmission method and apparatus, a device, a storage medium, and a product.

BACKGROUND

In a 5th generation (5G) mobile communication technology system, a terminal device performs data transmission according to a configured time-domain unit.

In the related art, multiple types of time-domain unit are configured in a sub-band full duplex (SBFD) technology. For example, an uplink symbol, a downlink symbol, a flexible symbol, a downlink symbol containing an uplink sub-band, an uplink symbol containing a downlink sub-band, and the like are configured in SBFD.

In the case where the terminal device is configured with one or more types of time-domain unit, how to perform data transmission is still an urgent problem to be solved.

SUMMARY

A transmission method and apparatus, a device, a storage medium, and a product are provided in embodiments of the disclosure. The technical solution is as follows.

According to an aspect of the disclosure, a transmission method is provided. The method includes the following. A time-domain unit configured for a first transmission is determined. The time-domain unit configured for the first transmission contains one type of time-domain unit.

According to another aspect of the disclosure, a transmission method is provided. The method includes the following. A time-domain unit configured for a first transmission is determined. The time-domain unit includes a first time-domain unit and a second time-domain unit.

According to another aspect of the disclosure, a transmission method is provided. The method includes the following. A transmission parameter for a first transmission is determined based on one or two types of time-domain unit configured for the first transmission. The time-domain unit is a time-domain unit in a transmission resource allocated for the first transmission, and the transmission parameter includes at least one of a time-domain resource, a frequency-domain resource, or a power parameter.

According to another aspect of the disclosure, a transmission apparatus is provided. The apparatus includes a determining module. The determining module is configured to determine a time-domain unit configured for a first transmission. The time-domain unit configured for the first transmission contains one type of time-domain unit.

According to another aspect of the disclosure, a transmission apparatus is provided. The apparatus includes a determining module. The determining module is configured to determine a time-domain unit configured for a first transmission. The time-domain unit includes a first time-domain unit and a second time-domain unit.

According to another aspect of the disclosure, a transmission apparatus is provided. The apparatus includes a determining module. The determining module is configured to determine a transmission parameter for a first transmission based on one or two types of time-domain unit configured for the first transmission. The time-domain unit is a time-domain unit in a transmission resource allocated for the first transmission, and the transmission parameter includes at least one of a time-domain resource, a frequency-domain resource, or a power parameter.

According to another aspect of the disclosure, a chip is provided. The chip includes programmable logic circuits and/or program instructions. A communication device equipped with the chip is configured to, when running, implement the transmission method described in the above aspects.

According to another aspect of the disclosure, a terminal device is provided. The terminal device includes a processor, a transceiver coupled with the processor, and a memory configured to store executable instructions of the processor. The processor is configured to load and execute the executable instructions to implement the transmission method described in the above aspects.

According to another aspect of the disclosure, a network device is provided. The network device includes a processor, a transceiver coupled with the processor, and a memory configured to store executable instructions of the processor. The processor is configured to load and execute the executable instructions to implement the transmission method described in the above aspects.

According to another aspect of the disclosure, a computer-readable storage medium is provided. The computer-readable storage medium is configured to store at least one program which is loaded and executed by a processor to cause a communication device to implement the transmission method described in the above aspects.

According to another aspect of the disclosure, a computer program product is provided. The computer program product includes at least one program. The at least one program is stored in a computer-readable storage medium. A processor of a communication device is configured to read the at least one program from the computer-readable storage medium, and the processor is configured to execute the at least one program, to cause the communication device to perform the transmission method described in the above aspects.

The technical solution provided in embodiments of the disclosure can achieve at least the following beneficial effects. When one or more types of time-domain unit exist, one or two types of time-domain unit for a first transmission are determined based on a time-domain unit configured for the first transmission. As such, during the first transmission, the transmission can be performed according to the determined one or two types of time-domain unit, thereby avoiding failure of the first transmission due to inconsistent understanding between a terminal device and a network device when multiple types of time-domain unit exist at the same time.

BRIEF DESCRIPTION OF THE DRAWINGS

In order to describe more clearly technical solutions of embodiments of the disclosure, the following will give a brief introduction to the accompanying drawings used for describing the embodiments. Apparently, the accompanying drawings described below are merely some embodiments of the disclosure. Based on these drawings, those of ordinary skill in the art can also obtain other drawings without creative effort.

FIG. 1 is a schematic diagram of an X division duplex (XDD) technology provided in an exemplary embodiment of the disclosure.

FIG. 2 is a schematic diagram of a method for frequency-domain resource indication provided in an exemplary embodiment of the disclosure.

FIG. 3 is a schematic diagram of a method for frequency-domain resource indication provided in an exemplary embodiment of the disclosure.

FIG. 4 is a schematic diagram of a communication system provided in an exemplary embodiment of the disclosure.

FIG. 5 is a flowchart of a transmission method provided in another exemplary embodiment of the disclosure.

FIG. 6 is a flowchart of a transmission method provided in another exemplary embodiment of the disclosure.

FIG. 7 is a schematic diagram of a transmission method provided in another exemplary embodiment of the disclosure.

FIG. 8 is a schematic diagram of a transmission method provided in another exemplary embodiment of the disclosure.

FIG. 9 is a schematic diagram of a transmission method provided in another exemplary embodiment of the disclosure.

FIG. 10 is a schematic diagram of a transmission method provided in another exemplary embodiment of the disclosure.

FIG. 11 is a schematic diagram of a transmission method provided in another exemplary embodiment of the disclosure.

FIG. 12 is a schematic diagram of a transmission method provided in another exemplary embodiment of the disclosure.

FIG. 13 is a schematic diagram of a transmission method provided in another exemplary embodiment of the disclosure.

FIG. 14 is a schematic diagram of a transmission method provided in another exemplary embodiment of the disclosure.

FIG. 15 is a flowchart of a transmission method provided in another exemplary embodiment of the disclosure.

FIG. 16 is a flowchart of a transmission method provided in another exemplary embodiment of the disclosure.

FIG. 17 is a schematic diagram of a transmission method provided in another exemplary embodiment of the disclosure.

FIG. 18 is a flowchart of a transmission method provided in another exemplary embodiment of the disclosure.

FIG. 19 is a schematic diagram of a transmission method provided in another exemplary embodiment of the disclosure.

FIG. 20 is a flowchart of a transmission method provided in another exemplary embodiment of the disclosure.

FIG. 21 is a schematic diagram of a transmission method provided in another exemplary embodiment of the disclosure.

FIG. 22 is a flowchart of a transmission method provided in another exemplary embodiment of the disclosure.

FIG. 23 is a schematic diagram of a transmission method provided in another exemplary embodiment of the disclosure.

FIG. 24 is a flowchart of a transmission method provided in another exemplary embodiment of the disclosure.

FIG. 25 is a flowchart of a transmission method provided in another exemplary embodiment of the disclosure.

FIG. 26 is a flowchart of a transmission method provided in another exemplary embodiment of the disclosure.

FIG. 27 is a flowchart of a transmission method provided in another exemplary embodiment of the disclosure.

FIG. 28 is a flowchart of a transmission method provided in another exemplary embodiment of the disclosure.

FIG. 29 is a schematic diagram of a transmission method provided in another exemplary embodiment of the disclosure.

FIG. 30 is a flowchart of a transmission method provided in another exemplary embodiment of the disclosure.

FIG. 31 is a schematic diagram of a transmission method provided in another exemplary embodiment of the disclosure.

FIG. 32 is a flowchart of a transmission method provided in another exemplary embodiment of the disclosure.

FIG. 33 is a schematic diagram of a transmission method provided in another exemplary embodiment of the disclosure.

FIG. 34 is a flowchart of a transmission method provided in another exemplary embodiment of the disclosure.

FIG. 35 is a schematic diagram of a transmission method provided in another exemplary embodiment of the disclosure.

FIG. 36 is a flowchart of a transmission method provided in another exemplary embodiment of the disclosure.

FIG. 37 is a flowchart of a transmission method provided in another exemplary embodiment of the disclosure.

FIG. 38 is a flowchart of a transmission method provided in another exemplary embodiment of the disclosure.

FIG. 39 is a block diagram of a transmission apparatus provided in another exemplary embodiment of the disclosure.

FIG. 40 is a block diagram of a transmission apparatus provided in another exemplary embodiment of the disclosure.

FIG. 41 is a block diagram of a transmission apparatus provided in another exemplary embodiment of the disclosure.

FIG. 42 is a block diagram of a communication device provided in another exemplary embodiment of the disclosure.

DETAILED DESCRIPTION

In order to make the objectives, technical solutions, and advantages of the disclosure clearer, embodiments of the disclosure will be further described in detail below with reference to the accompanying drawings.
First, the following will give an introduction to the related art involved in embodiments of the disclosure.

(1) An uplink sub-band in a downlink symbol/slot

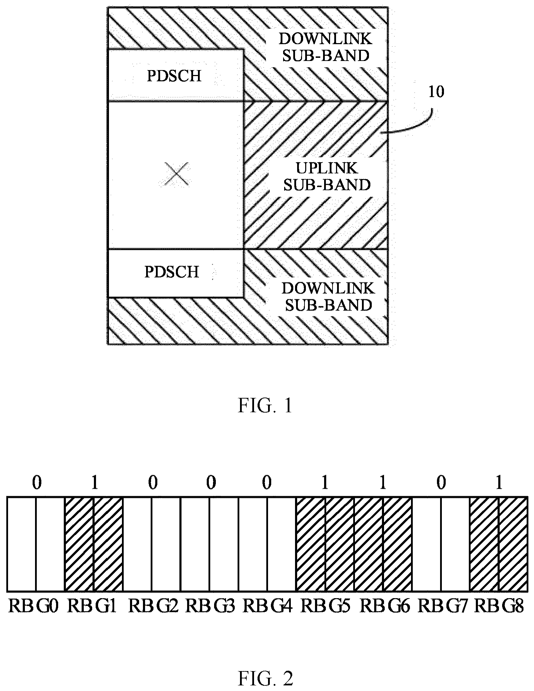

In the related art, data can be transmitted and received concurrently on different sub-bands in the same sub-frame, which is referred to as an X division duplex (XDD) technology and is mainly applied to a base station side. At a terminal device side, data is still only supported to be either transmitted or received in a sub-frame.
In some embodiments, the XDD technology is illustrated in FIG. 1, where intermediate sub-band 10 of a frequency-domain resource corresponding to a downlink symbol/slot is configured as an uplink sub-band. When a terminal device is configured or indicated to receive data in the downlink symbol/slot, for example, receive data carried in a physical downlink shared channel (PDSCH), a frequency-domain resource occupied by the PDSCH overlaps the uplink sub-band of the frequency-domain resource corresponding to the downlink symbol/slot. Since for the resource part of the uplink sub-band, the base station side is in a state of receiving uplink data from another terminal device, the base station side is unable to transmit downlink data to the terminal device on the uplink sub-band. In other words, the base station side can transmit the PDSCH to the terminal device only on downlink sub-bands on two sides of the uplink sub-band.
In some embodiments, a sub-band full duplex (SBFD) time-domain configuration is proposed based on the XDD technology. Exemplarily, an intermediate sub-band of a frequency-domain resource corresponding to a sub-frame, slot, or symbol configured as downlink is configured as an uplink sub-band, so that the base station can perform both uplink transmission and downlink transmission in the same sub-frame. However, the terminal device side generally uses only one sub-band, and only supports data transmission or data reception in the same sub-frame.
Sub-band configurations in different symbols or different slots in a sub-frame may be the same or different, which is not limited in embodiments of the disclosure.
In some other embodiments, SBFD may also be referred to as a sub-band transmission-related technology or a bandwidth part (BWP) transmission-related technology. That is, a corresponding transmission, such as an uplink transmission, can be performed only on a sub-band or a BWP.

(2) Time-domain resource indication

In the related art, it is supported that one downlink control information (DCI) schedules one PDSCH or physical uplink shared channel (PUSCH). The DCI contains a time-domain resource assignment/allocation (TDRA) field, which indicates time-domain resource allocation information of the one PDSCH or PUSCH scheduled by the DCI, for example, a slot where the PDSCH/PUSCH is located, a symbol occupied by the PDSCH/PUSCH, and a PDSCH/PUSCH mapping type.
The time-domain resource allocation of the PDSCH/PUSCH is determined as follows.

- A TDRA table is configured for the terminal device through a radio resource control (RRC) parameter per BWP. Alternatively, one or more default TDRA tables are defined for the terminal device through protocol definition.

The TDRA table includes one or more rows. Each row contains the following parameters: the slot offset $K0$/$K2$, which is used for determining a slot offset between a slot where the DCI is located and a slot where the PDSCH/PUSCH is located; the start and length indicator (SLIV), or the start symbol $S$ and the allocation length $L$, which is used for determining a start symbol and the number of symbols occupied by the PDSCH/PUSCH; and the PDSCH/PUSCH mapping type, which is used for determining a mapping type of the PDSCH/PUSCH.

- Through the TDRA field in the DCI, one TDRA row is indicated from the TDRA table configured through the RRC parameter or defined by the protocol. For example, the TDRA field value m provides a row index $m+1$ to the above allocation table.

The TDRA table is configured through the RRC parameter (for example, *PDSCH-Time Domain Resource Allocation List*/*PUSCH-Time Domain Resource Allocation List).*

(3) Frequency-domain resource indication

In some embodiments, generally, there are the following two methods for frequency-domain resource indication.

• Resource allocation type 0

Resource allocation is performed according to type 0. A frequency-domain resource information field, i.e., resource block (RB) allocation information, includes a bitmap for indicating or allocating a resource block group (RBG) for the terminal device. A RBG is a set of consecutive physical resource blocks (PRBs) or a set of consecutive virtual resource blocks (VRBs). The size of the RBG is determined by a higher-layer parameter and is generally represented by P. RBGs in different BWPs may be of different sizes, and RBGs in different frequency-domain resource configurations may also be of different sizes.

For an uplink or downlink BWP $i$ including $N_{BWP,i}^{size}$ RBs, the total number of RBGs is represented by $N_{RBG}$. The calculation formula is $N_{RBG}=\lceil(N_{BWP,i}^{size}+(N_{BWP,i}^{size}\ mod\ P))\div P\rceil$. The number of RBs in the first RBG (which can be understood as the size of the first RBG) is $RBG_0^{size}=P\text{-}N_{BWP,i}^{start}modP$. If $(N_{BHP,i}^{start}+N_{B\pi P,i}^{size})modP>0$, the number of RBs in the last RBG is $RBG_{last}^{size}=(N_{B\pi P,i}^{start}+N_{B\pi P,i}^{size})modP$. If $(N_{BHP,i}^{start}+N_{B\pi P,i}^{size})modP\leq0$, the number of RBs in the last RBG is $RBG_{last}^{size}=P$. The size of the other RBGs is $P$. $\lceil*\rceil$ represents rounding up.

The bitmap is of $N_{RBG}$ bits in total, with one bitmap bit per RBG. The RBGs are arranged in the order of increasing frequency, and an index of the BWP starts from a BWP with the lowest frequency. The order of RBG bitmap is such that RBG 0 to RBG $N_{RBG}\text{-}1$ are mapped from most significant bit (MSB) to last/least significant bit (LSB). An RBG that is allocated to the terminal device and an RBG that is not allocated to the terminal device are represented by different bit values in the bitmap. When a corresponding bit value of an RBG in the bitmap is a first value, it indicates that the RBG is an RBG that is allocated to the terminal device. When a corresponding bit value of an RBG in the bitmap is a second value, it indicates that the RBG is an RBG that is not allocated to the terminal device. For example, if an RBG is allocated to the terminal device, a corresponding bit value of the RBG in the bitmap is 1. If an RBG is not allocated to the terminal device, a corresponding bit value of the RBG in the bitmap is 0.

Exemplarily, as illustrated in FIG. 2, taking an RGB including two RBs as an example for illustration, a network device performs resource allocation on RBG0 to RBG8 according to type 0. A bitmap is 010001101, which means that corresponding bit values of RBG1, RBG5, RBG6, and RBG8 in the bitmap are 1, and corresponding bit values of the other RBGs in the bitmap are 0. Therefore, it indicates that RBG1, RBG5, RBG6, and RBG8 are allocated to the terminal device.

• Resource allocation type 1

Resource allocation is performed according to type 1. A frequency-domain resource information field, i.e., RB allocation information, indicates or allocates a set of consecutive VRBs to the terminal device. Mappings of PRBs and VRBs in the set of consecutive VRBs are interleaved or non-interleaved, and the VRBs in the set of consecutive VRBs are in an active BWP.

For type 1, the frequency-domain resource information field consists of resource indication values (RIVs), and the RIVs are determined based on a start VRB number $RB_{start}$ and a continuous length $L_{RBS}$ of allocated RBs. The calculation formulas are as follows. If $(L_{RBS}\text{-}1)\leq\lfloor N_{BWP}^{size}/2\rfloor$, then $RIV=N_{BWP}^{size}\times(L_{RBS}\text{-}1)+RB_{start}$. If $(L_{RBS}\text{-}1)>\lfloor N_{BWP}^{size}/2\rfloor$, then $RIV=N_{BWP}^{size}\times(N_{BWP}^{size}\text{-}L_{RBS}+1)+(N_{BWP}^{size}\text{-}1\text{-}RB_{start})$. Herein, $1\leq L_{RBS}\leq(N_{BWP}^{size}\text{-}RB_{start})$, and $\lfloor*\rfloor$ represents rounding down.

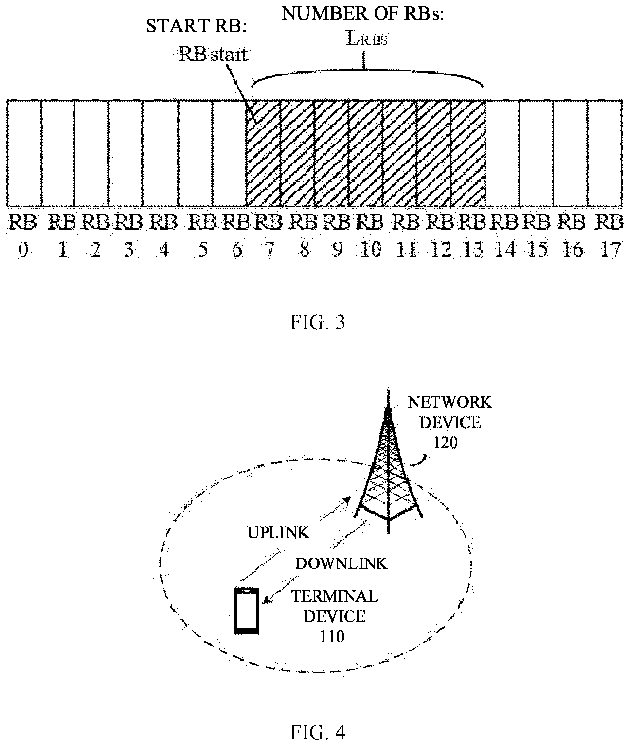

Exemplarily, as illustrated in FIG. 3, a network device performs resource allocation on RB0 to RB17 according to type 1. It indicates that a start number $RB_{start}$ of an RB is 7 and a continuous length $L_{RBS}$ of RBs is 7, which means that RB7 to RB14 are allocated to the terminal device.

FIG. 4 is a schematic diagram of a communication system provided in an exemplary embodiment of the disclosure. The communication system includes a terminal device 110 and a network device 120.

The terminal device 110 in the disclosure may also be referred to as a user equipment (UE), an access terminal, a subscriber unit, a subscriber station, a mobile station, a remote station, a remote terminal, a mobile device, a user terminal, a terminal, a wireless communication device, a user agent, or a user apparatus. The terminal includes but is not limited to: a handheld device, a wearable equipment, a vehicle-mounted device, an Internet of things (IoT) device, and the like, for example, a mobile phone, a tablet computer, an e-book reader, a laptop portable computer, a desktop computer, a television, a game console, a mobile Internet device (MID), an augmented reality (AR) terminal, a virtual reality (VR) terminal, and a mixed reality (MR) terminal, a wearable device, a handle, an electronic tag, a controller, a wireless terminal in industrial control, a wireless terminal in self driving, a wireless terminal in remote medicine, a wireless terminal in a smart grid, a wireless terminal in transportation safety, a wireless terminal in a smart city, a wireless terminal in a smart home, a wireless terminal in remote medical surgery, a cellular phone, a cordless phone, a session initiation protocol (SIP) phone, a wireless local loop (WLL) station, a personal digital assistant (PDA), a set top box (STB), a customer premise equipment (CPE), or the like.

The network device 120 in the disclosure provides a wireless communication function. The network device 120 includes but is not limited to: an evolved node B (eNB), a radio network controller (RNC), a node B (NB), a base station controller (BSC), a base transceiver station (BTS), a home base station (for example, a home evolved node B or a home node B (HNB)), a baseband unit (BBU), an access point (AP) in a wireless fidelity (Wi-Fi) system, a wireless relay node, a wireless backhaul node, a transmission point (TP), or a transmission and reception point (TRP). The network device 120 may also be a next generation node B (gNB) or a transmission point (TRP or TP) in a 5th generation (5G) mobile communication system, or may be an antenna panel or a group of antenna panels (including multiple antenna panels) of a base station in the 5G system, or may be a network node forming a gNB or a transmission point, for example, a BBU or a distributed unit (DU), or a base station in a beyond fifth generation (B5G) mobile communication system or a 6th generation (6G) mobile communication system, etc., or a core network (CN), fronthaul, backhaul, a radio access network (RAN), a network slice, etc., or a serving cell, a primary cell (PCell), a primary secondary cell (PSCell), a special cell (SpCell), a secondary cell (SCell), a neighbor cell, or the like of a terminal device.

The terminal device 110 and the network device 120 communicate with each other by using some air interface technology, such as a UE-universal mobile telecommunication system (UMTS) terrestrial radio access network (UE-UTRAN, Uu) interface.

Exemplarily, there are two communication scenarios between the terminal device 110 and the network device 120: an uplink communication scenario and a downlink communication scenario. In the uplink communication, the terminal device 110 transmits a signal to the network device 120, and in the downlink communication, the network device 120 transmits a signal to the terminal device 110.

The technical solutions provided in embodiments of the disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, an advanced long term evolution (LTE-A) system, a UMTS, a worldwide interoperability for microwave access (WiMAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN), Wi-Fi, a cellular IoT system, a cellular passive IoT system, and are also applicable to a subsequent evolved system of a 5G NR system, and are further applicable to a B5G or 6G system and a subsequent evolved system thereof. In some embodiments of the disclosure, "NR" may be also referred to as a 5G NR system or a 5G system. The 5G mobile communication system includes a non-standalone (NSA) and/or a standalone (SA).

The technical solutions provided in embodiments of the disclosure are also applicable to machine type communication (MTC), long term evolution-machine (LTE-M) technology, a device to device (D2D) network, a machine to machine (M2M) network, an IoT network, or other networks. The IoT network may include, for example, Internet of vehicles. The communication modes in the Internet of vehicles system are collectively referred to as vehicle to X (V2X, where X may represent anything). For example, the V2X may include: vehicle to vehicle (V2V) communication, vehicle to infrastructure (V2I) communication, vehicle to pedestrian (V2P) communication, vehicle to network (V2N) communication, or the like.

For a case where only one type of time-domain unit is configured for a first transmission

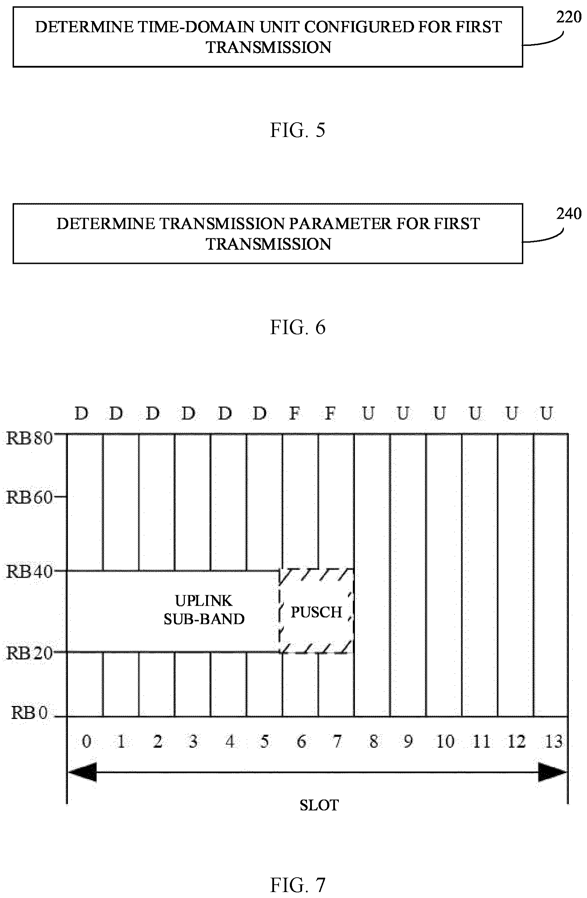

FIG. 5 is a flowchart of a transmission method provided in an exemplary embodiment of the disclosure. The method is performed by a terminal device or a network device, and includes the following.

At 220, a time-domain unit configured for a first transmission is determined.

The first transmission refers to data transmission between the network device and the terminal device, including an uplink transmission and/or a downlink transmission. The uplink transmission refers to data transmission from the terminal device to the network device, and the downlink transmission refers to data transmission from the network device to the terminal device. A transmission resource allocated for the first transmission refers to a resource allocated for the uplink transmission and used for uplink data transmission, or refers to a resource allocated for the downlink transmission and used for downlink data transmission.

The time-domain unit refers to a transmission unit in a time-domain direction, which includes at least one of a subframe, a slot, or a symbol. In embodiments of the disclosure, for example, the time-domain unit is a symbol. The time-domain unit includes a time-domain unit only for the uplink transmission, a time-domain unit only for the downlink transmission, and a time-domain unit containing both an uplink sub-band and a downlink sub-band. In some embodiments, the time-domain unit is semi-statically configured or dynamically indicated.

In some embodiments, if only one type of time-domain unit (first time-domain unit) is configured for the first transmission, it is determined that the time-domain unit configured for the first transmission is the one type of time-domain unit (first time-domain unit). For example, when the time-domain unit is a symbol, the first time-domain unit is an SBFD symbol or a non-SBFD symbol.

In some embodiments, only the one type of time-domain unit is allocated to the time-domain unit configured for the first transmission. Alternatively, only the one type of time-domain unit is allocated by the network device to the time-domain unit configured for the first transmission. Alternatively, the terminal device does not expect that at least two types of time-domain unit are allocated by the terminal device to the time-domain unit configured for the first transmission. Alternatively, the terminal device expects that only the one type of time-domain unit is allocated by the network device to the time-domain unit configured for the first transmission. Alternatively, the terminal device discards the first transmission for which the at least two types of time-domain unit are allocated. In the existence of what the terminal device expects or does not expect, the configuration for the first transmission by the network device may satisfy what the terminal device expects or does not expect, or may not satisfy what the terminal device expects or does not expect.

In some embodiments, the first transmission is a transmission configured by an upper layer, and the terminal device performs the transmission only in the one type of time-domain unit allocated, or the terminal device discards the first transmission for which at least two types of time-domain unit are allocated. Since a resource configured by the upper layer is difficult to adapt to dynamic resource configuration and service requirements, it cannot be avoided that two types of time-domain unit are configured. By means of discarding or delaying a transmission, the complexity of the transmission can be avoided, and the complexity of scheduling can also be avoided. The transmission configured by the upper layer includes one or more of a semi-static transmission and a semi-persistent transmission. Exemplarily, the first transmission is a semi-static transmission, and the semi-static transmission is a periodic transmission. In an embodiment, the semi-static transmission can be used or valid immediately upon configuration. In another embodiment, the semi-static transmission needs to be activated for use or in a valid state in the case where activation signaling is received, and stops being used or is in an invalid state in the case where deactivation signaling is received.

In some embodiments, the first transmission is a transmission indicated by physical-layer signaling, and the terminal device does not expect at least two types of time-domain unit are allocated by the terminal device to the time-domain unit configured for the first transmission, or the terminal device expects that only the one type of time-domain unit is allocated by the network device to the time-domain unit configured for the first transmission, or only the one type of time-domain unit is allocated by the network device to the time-domain unit configured for the first transmission. A resource indicated by the physical-layer signaling can be configured in real time, so that two types of time-domain unit is easily avoided, and a determining operation of the terminal is avoided, thereby reducing the complexity of the terminal. The physical-layer signaling indication can be indicated through DCI.

In some embodiments, when the first transmission is an uplink transmission, it is determined that the one type of time-domain unit configured for the first transmission is one of a time-domain unit containing an uplink sub-band and an uplink time-domain unit. In some embodiments, when the first transmission is a downlink transmission, it is determined that the one type of time-domain unit configured for the first transmission is one of a time-domain unit containing a downlink sub-band and a downlink time-domain unit.

In some embodiments, the first transmission is at least one of a random access channel (RACH), a synchronization signal and physical broadcast channel (PBCH) block (SSB), or control resource set (CORESET) 0. The first transmission is a transmission related to at least one of RACH, SSB, or COERSET 0, or the first transmission is used for transmitting at least one of RACH, SSB, or COERSET 0. In some embodiments, the network device transmits to the terminal device at least one of RACH, SSB, or COERSET 0.

In some embodiments, before an uplink sub-band configuration or a downlink sub-band configuration or an SBFD configuration is received, the time-domain unit configured for the first transmission is determined. The uplink sub-band configuration includes an uplink time-domain unit and a time-domain unit containing an uplink sub-band, and the downlink sub-band configuration includes a downlink time-domain unit and a time-domain unit containing a downlink sub-band.

Channels such as an RACH and a broadcast channel are basic signals for the terminal device to access the network device, and the reliability and stability of transmission thereof are preferentially ensured. In addition, before receiving these signals, the terminal device generally is unable to know whether multiple types of time-domain unit are configured, and the use of the determined unique transmission mode can ensure consistent understanding between the terminal device and the network device and ensure the reliability of mobile communication. As above mentioned, in embodiments of the disclosure, when one type of time-domain unit exists, the one type of time-domain unit for the first transmission is determined based on the time-domain unit configured for the first transmission. As such, during data transmission, the transmission can be performed according to the determined one type of time-domain unit, so that multiple types of time-domain unit will not exist at the same time, and thus the data transmission will not fail.

FIG. 6 is a flowchart of a transmission method provided in an exemplary embodiment of the disclosure. The method is performed by a terminal device or a network device. The method further includes the following.

At 240, a transmission parameter for the first transmission is determined.

The transmission parameter includes at least one of a time-domain resource, a frequency-domain resource, or a power parameter.

In some embodiments, a time-domain resource for the first transmission is determined based on the one type of time-domain unit configured for the first transmission. The time-domain resource for the first transmission includes all time-domain units in the one type of time-domain unit.

In some embodiments, when the first transmission is an uplink transmission, it is determined that the one type of time-domain unit configured for the first transmission is one of a time-domain unit containing an uplink sub-band and an uplink time-domain unit. In some embodiments, when the first transmission is a downlink transmission, it is determined that the one type of time-domain unit configured for the first transmission is one of a time-domain unit containing a downlink sub-band and a downlink time-domain unit.

In some embodiments, when only the one type of time-domain unit (for example, a first time-domain unit) is configured for the first transmission, it is determined that the time-domain resource for the first transmission includes all time-domain units in the first time-domain unit. For example, when the time-domain unit is a symbol, the first time-domain unit is an SBFD symbol or a non-SBFD symbol.

In some embodiments, when a time-domain unit allocated for the uplink transmission only includes a time-domain unit containing an uplink sub-band, it is determined that a time-domain resource for the uplink transmission includes all the time-domain units containing the uplink sub-bands. Exemplarily, as illustrated in FIG. 7, a slot includes symbol 0 to symbol 13, where symbol 0 to symbol 7 each are a time-domain unit containing an uplink sub-band, and symbol 8 to symbol 13 each are an uplink time-domain unit. Transmission resources allocated for a PUSCH are symbol 6 and symbol 7, that is, time-domain units allocated for the PUSCH contain only one type of time-domain unit. In this case, it is determined that time-domain resources for PUSCH transmission include symbol 6 and symbol 7.

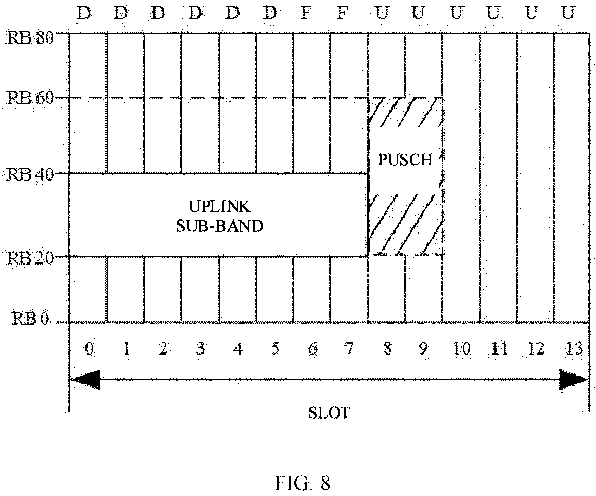

In some embodiments, when a time-domain unit in a transmission resource allocated for the uplink transmission only includes an uplink time-domain unit, it is determined that a time-domain resource for the uplink transmission includes all the uplink time-domain units. Exemplarily, as illustrated in FIG. 8, a slot includes symbol 0 to symbol 13, where symbol 0 to symbol 7 each are a time-domain unit containing an uplink sub-band, and symbol 8 to symbol 13 each are an uplink time-domain unit. Transmission resources allocated for a PUSCH are symbol 8 and symbol 9, that is, time-domain units allocated for the PUSCH contain only one type of time-domain unit. In this case, it is determined that time-domain resources for PUSCH transmission include symbol 8 and symbol 9.

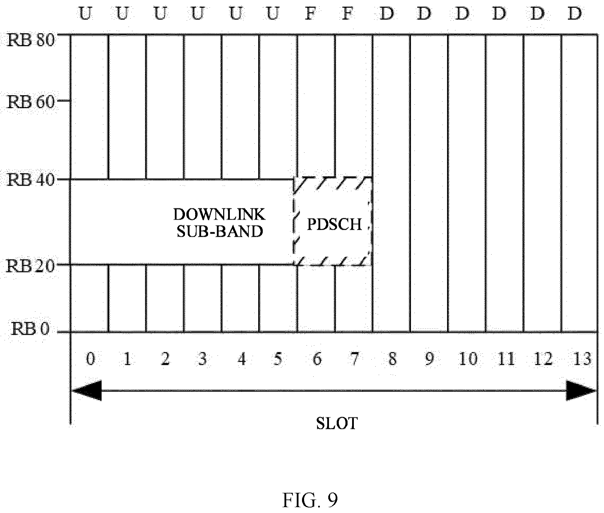

In some embodiments, when a time-domain unit allocated for the downlink transmission only includes a time-domain unit containing a downlink sub-band, it is determined that a time-domain resource for the downlink transmission includes all the time-domain units containing the downlink sub-bands. Exemplarily, as illustrated in FIG. 9, a slot includes symbol 0 to symbol 13, where symbol 0 to symbol 7 each are a time-domain unit containing a downlink sub-band, and symbol 8 to symbol 13 each are a downlink time-domain unit. Transmission resources allocated for a PDSCH are symbol 6 and symbol 7, that is, time-domain units allocated for the PDSCH contain only one type of time-domain unit. In this case, it is determined that time-domain resources for PDSCH transmission include symbol 6 and symbol 7.

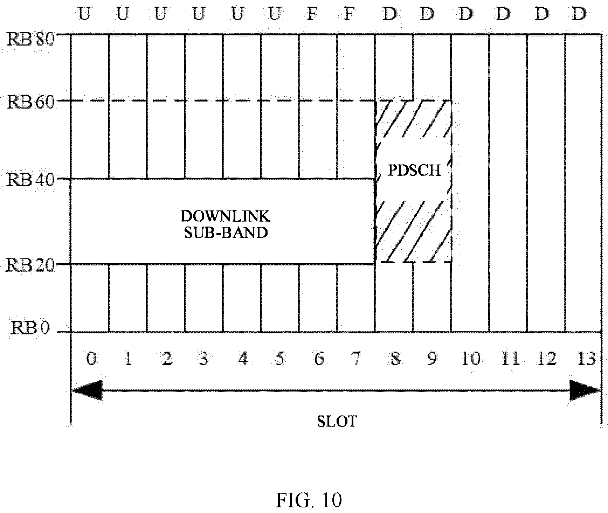

In some embodiments, when a time-domain unit in a transmission resource allocated for the downlink transmission only includes a downlink time-domain unit, it is determined that a time-domain resource for the downlink transmission includes all the downlink time-domain units. Exemplarily, as illustrated in FIG. 10, a slot includes symbol 0 to symbol 13, where symbol 0 to symbol 7 each are a time-domain unit containing a downlink sub-band, and symbol 8 to symbol 13 each are a downlink time-domain unit. Transmission resources allocated for a PDSCH are symbol 8 and symbol 9, that is, time-domain units allocated for the PDSCH contain only one type of time-domain unit. In this case, it is determined that time-domain resources for PDSCH transmission include symbol 8 and symbol 9.

In some embodiments, a frequency-domain resource for the first transmission is determined based on the one type of time-domain unit configured for the first transmission.

In some embodiments, when the first transmission is an uplink transmission, a frequency-domain resource for the uplink transmission is determined based on an intersection between an uplink frequency-domain resource corresponding to the one type of time-domain unit allocated and a frequency-domain resource allocated for the uplink transmission. The frequency-domain resource for the uplink transmission is in a range of the uplink frequency-domain resource corresponding to the one type of time-domain unit and the frequency-domain resource allocated for the uplink transmission. The terminal does not expect that the frequency-domain resource for the uplink transmission is outside the uplink frequency-domain resource corresponding to the one type of time-domain unit and the frequency-domain resource allocated for the uplink transmission. The uplink frequency-domain resource corresponding to the one type of time-domain unit is limited by a bandwidth of a BWP, or is limited by the bandwidth of the BWP and a bandwidth of an uplink sub-band.

In some embodiments, when only the one type of time-domain unit (for example, a first time-domain unit) is configured for the uplink transmission, a frequency-domain resource for the uplink transmission is determined based on an intersection between an uplink frequency-domain resource corresponding to the first time-domain unit allocated and a frequency-domain resource allocated for the uplink transmission.

In some embodiments, a time-domain unit allocated for the uplink transmission contains only the one type of time-domain unit (for example, a first time-domain unit). A frequency-domain resource for the uplink transmission is determined based on an intersection between an uplink frequency-domain resource corresponding to the first time-domain unit allocated and a frequency-domain resource allocated for the uplink transmission.

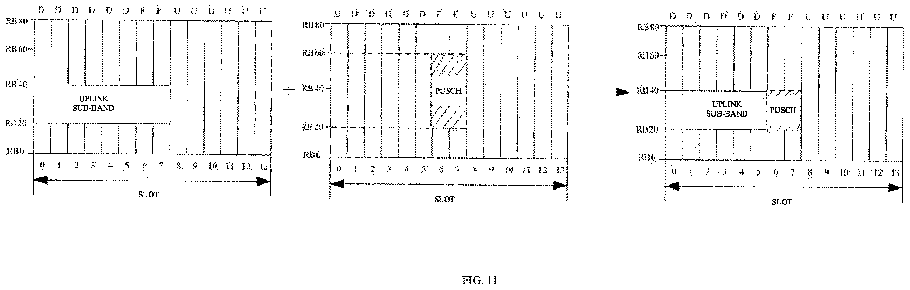

In some embodiments, when the time-domain unit allocated for the uplink transmission includes only a time-domain unit containing an uplink sub-band, a frequency-domain resource for the uplink transmission is determined based on an intersection between an uplink frequency-domain resource corresponding to the time-domain unit containing the uplink sub-band allocated and a frequency-domain resource allocated for the uplink transmission. Exemplarily, as illustrated in FIG. 11, a slot includes symbol 0 to symbol 13, where symbol 0 to symbol 7 each are a time-domain unit containing an uplink sub-band, and symbol 8 to symbol 13 each are an uplink time-domain unit. Transmission resources allocated for a PUSCH are symbol 6 and symbol 7, that is, time-domain units allocated for the PUSCH are the time-domain units containing the uplink sub-bands. Uplink frequency-domain resources corresponding to the time-domain units containing the uplink sub-bands are RB20 to RB40, and frequency-domain resources allocated for the uplink transmission are RB20 to RB60. Based on an intersection between the uplink frequency-domain resources corresponding to the time-domain units containing the uplink sub-bands and the frequency-domain resources allocated for the uplink transmission, it is determined that frequency-domain resources for the uplink transmission are RB20 to RB40.

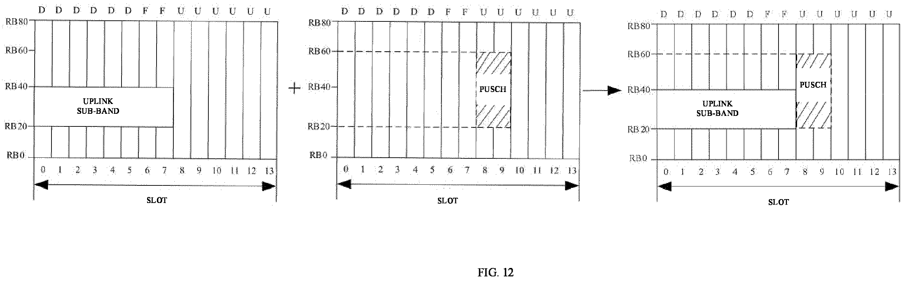

In some embodiments, when the time-domain unit allocated for the uplink transmission includes only an uplink time-domain unit, a frequency-domain resource for the uplink transmission is determined based on an intersection between an uplink frequency-domain resource corresponding to the uplink time-domain unit allocated and a frequency-domain resource allocated for the uplink transmission. Exemplarily, as illustrated in FIG. 12, a slot includes symbol 0 to symbol 13, where symbol 0 to symbol 7 each are a time-domain unit containing an uplink sub-band, and symbol 8 to symbol 13 each are an uplink time-domain unit. Transmission resources allocated for a PUSCH are symbol 8 and symbol 9, that is, time-domain units allocated for the PUSCH are the uplink time-domain units. Uplink frequency-domain resources corresponding to the uplink time-domain units are RB0 to RB80, and frequency-domain resources allocated for the uplink transmission are RB20 to RB60. Based on an intersection between the uplink frequency-domain resources corresponding to the uplink time-domain units and the frequency-domain resources allocated for the uplink transmission, it is determined that frequency-domain resources for the uplink transmission are RB20 to RB60.

In some embodiments, when the first transmission is a downlink transmission, a frequency-domain resource for the downlink transmission is determined based on an intersection between a downlink frequency-domain resource corresponding to the one type of time-domain unit allocated and a frequency-domain resource allocated for the downlink transmission. The frequency-domain resource for the downlink transmission is in a range of the downlink frequency-domain resource corresponding to the one type of time-domain unit and the frequency-domain resource allocated for the downlink transmission. The terminal does not expect that the frequency-domain resource for the downlink transmission is outside the downlink frequency-domain resource corresponding to the one type of time-domain unit and the frequency-domain resource allocated for the downlink transmission. The downlink frequency-domain resource corresponding to the one type of time-domain unit is limited by a bandwidth of a BWP, or is limited by the bandwidth of the BWP and a bandwidth of a downlink sub-band.

In some embodiments, when only the one type of time-domain unit (for example, a first time-domain unit) is configured for the first transmission, a frequency-domain resource for the downlink transmission is determined based on an intersection between a downlink frequency-domain resource corresponding to the first time-domain unit allocated and a frequency-domain resource allocated for the downlink transmission.

In some embodiments, a time-domain unit allocated for the downlink transmission contains only the one type of time-domain unit (for example, a first time-domain unit). A frequency-domain resource for the downlink transmission is determined based on an intersection between a downlink frequency-domain resource corresponding to the first time-domain unit allocated and a frequency-domain resource allocated for the downlink transmission.

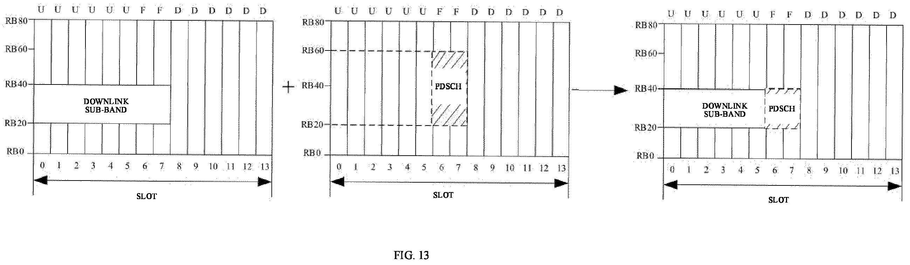

In some embodiments, when the time-domain unit allocated for the downlink transmission includes only a time-domain unit containing a downlink sub-band, a frequency-domain resource for the downlink transmission is determined based on an intersection between a downlink frequency-domain resource corresponding to the time-domain unit containing the downlink sub-band allocated and a frequency-domain resource allocated for the downlink transmission. Exemplarily, as illustrated in FIG. 13, a slot includes symbol 0 to symbol 13, where symbol 0 to symbol 7 each are a time-domain unit containing a downlink sub-band, and symbol 8 to symbol 13 each are a downlink time-domain unit. Transmission resources allocated for a PDSCH are symbol 6 and symbol 7, that is, time-domain units allocated for the PDSCH are the time-domain units containing the downlink sub-bands. Downlink frequency-domain resources corresponding to the time-domain units containing the downlink sub-bands are RB20 to RB40, and frequency-domain resources allocated for the downlink transmission are RB20 to RB60. Based on an intersection between the downlink frequency-domain resources corresponding to the time-domain units containing the downlink sub-bands and the frequency-domain resources allocated for the downlink transmission, it is determined that frequency-domain resources for the downlink transmission are RB20 to RB40.

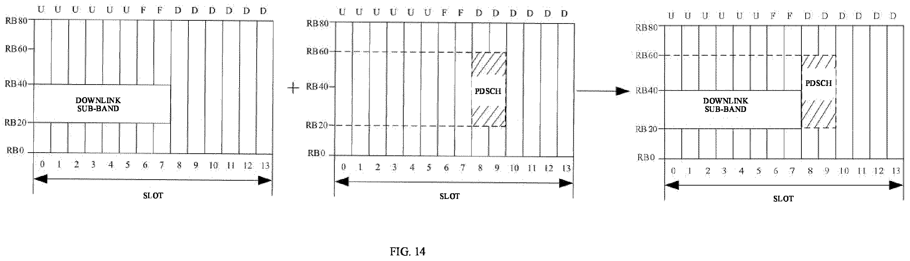

In some embodiments, when the time-domain unit allocated for the downlink transmission includes only a downlink time-domain unit, a frequency-domain resource for the downlink transmission is determined based on an intersection between a downlink frequency-domain resource corresponding to the downlink time-domain unit allocated and a frequency-domain resource allocated for the downlink transmission. Exemplarily, as illustrated in FIG. 14, a slot includes symbol 0 to symbol 13, where symbol 0 to symbol 7 each are a time-domain unit containing a downlink sub-band, and symbol 8 to symbol 13 each are a downlink time-domain unit. Transmission resources allocated for a PDSCH are symbol 8 and symbol 9, that is, time-domain units allocated for the PDSCH are the downlink time-domain units. Downlink frequency-domain resources corresponding to the downlink time-domain units are RB0 to RB80, and frequency-domain resources allocated for the downlink transmission are RB20 to RB60. Based on an intersection between the downlink frequency-domain resources corresponding to the downlink time-domain units and the frequency-domain resources allocated for the downlink transmission, it is determined that frequency-domain resources for the downlink transmission are RB20 to RB60.

In some embodiments, when the first transmission is an uplink transmission, a power parameter for the first transmission is determined based on the one type of time-domain unit configured for the first transmission. The power parameter is a parameter for determining an uplink transmit power.

In some embodiments, when only the one type of time-domain unit (for example, a first time-domain unit) is configured for the first transmission, a power parameter for the uplink transmission is determined based on the first time-domain unit.

In some embodiments, the power parameter for the uplink transmission includes at least one of a power parameter configured for the one type of time-domain unit or the number (quantity) of frequency-domain resources corresponding to the one type of time-domain unit. The number of frequency-domain resources corresponding to the one type of time-domain unit refers to the number of frequency-domain resources available for the uplink transmission in the one type of time-domain unit.

In some embodiments, when only the one type of time-domain unit (for example, a first time-domain unit) is configured for the first transmission, a power parameter for the uplink transmission is determined based on a power parameter configured for the first time-domain unit and/or the number of frequency-domain resources corresponding to the first time-domain unit.

In some embodiments, a transmission resource allocated for the uplink transmission includes only the one type of time-domain unit. The one type of time-domain unit is a first time-domain unit. A power parameter for the uplink transmission is determined based on a power parameter for the first time-domain unit and/or the number of frequency-domain resources corresponding to the first time-domain unit.

In some embodiments, when a time-domain unit allocated for the uplink transmission is a time-domain unit containing an uplink sub-band, a power parameter for the uplink transmission is determined based on a power parameter for the time-domain unit containing the uplink sub-band and/or the number of frequency-domain resources corresponding to the time-domain unit containing the uplink sub-band.

In some embodiments, when a time-domain unit allocated for the uplink transmission is an uplink time-domain unit, a power parameter for the uplink transmission is determined based on a power parameter for the uplink time-domain unit and/or the number of frequency-domain resources corresponding to the uplink time-domain unit.

In some embodiments, the first transmission is performed using the above transmission parameter for the first transmission.

In some embodiments, for the semi-static transmission, the terminal device performs the transmission only in the one type of time-domain unit allocated, or the terminal device discards the first transmission for which at least two types of time-domain unit are allocated; and/or for the dynamic transmission, the terminal device does not expect that at least two types of time-domain unit are allocated by the terminal device to the time-domain unit configured for the first transmission, or the terminal device expects that only the one type of time-domain unit is allocated by the network device to the time-domain unit configured for the first transmission, or only the one type of time-domain unit is allocated by the network device to the time-domain unit configured for the first transmission. This is because the semi-static transmission is generally configured by an upper layer, which is not convenient for refined or dynamic adjustment, and thus, two types of time-domain unit may be configured at the same time. In contrast, the dynamic transmission is generally scheduled in real time by a base station, and the base station side can avoid configuring two types of time-domain unit at the same time.

In some embodiments, the terminal device receives a first configuration, where the first configuration is used for configuring a transmission resource for the first transmission, and a time-domain unit in the transmission resource is allocated as a first time-domain unit. The terminal device receives a second configuration, where the second configuration is used for changing all or part of the first time-domain unit in the transmission resource to a second time-domain unit. The terminal device discards the first transmission or performs the first transmission not using the first time-domain unit.

In some embodiments, the time-domain unit containing the uplink sub-band may mean that a time-domain unit is configured with an uplink sub-band or a downlink time-domain unit is configured with an uplink sub-band. The time-domain unit containing the downlink sub-band may mean that a time-domain unit is configured with a downlink sub-band or an uplink time-domain unit is configured with a downlink sub-band.

As above mentioned, in embodiments of the disclosure, when one type of time-domain unit exists, the transmission parameter for the first transmission is determined based on the determined one type of time-domain unit, thereby avoiding failure of data transmission. In addition, by configuring only the one type of time-domain unit, the processing complexity of the terminal device can be simplified, and the occupation or requirement for computing resources and processing resources of the terminal device can be reduced, thereby reducing the transmission delay of the first transmission.

For a case where two types of time-domain unit are configured for a first transmission

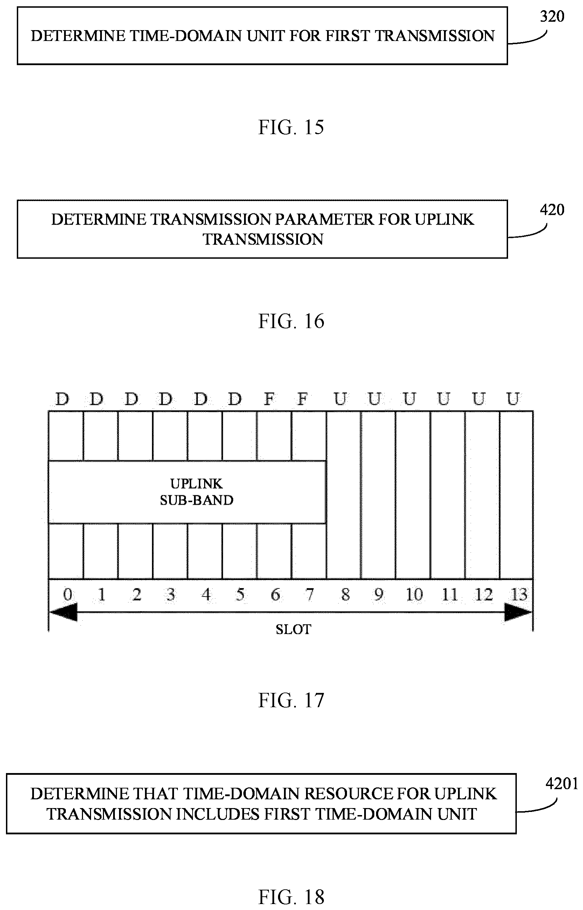

FIG. 15 is a flowchart of a transmission method provided in an exemplary embodiment of the disclosure. The method is performed by a terminal device or a network device, and includes the following.

At 320, a time-domain unit for a first transmission is determined.

The first transmission refers to data transmission between the network device and the terminal device, including an uplink transmission and/or a downlink transmission. The uplink transmission refers to data transmission from the terminal device to the network device, and downlink transmission refers to data transmission from the network device to the terminal device.

In some embodiments, when the first transmission is an uplink transmission, a transmission resource for the first transmission refers to a resource allocated for the uplink transmission and used for uplink data transmission. In some embodiments, when the first transmission is a downlink transmission, the transmission resource for the first transmission refers to a resource allocated for the downlink transmission and used for downlink data transmission.

In this embodiment, the transmission resource for the first transmission includes a first time-domain unit and a second time-domain unit. For example, when the time-domain unit is a symbol, the first time-domain unit is an SBFD symbol, and the second time-domain unit is a non-SBFD symbol; or the first time-domain unit is the non-SBFD symbol, and the second time-domain unit is the SBFD symbol.

When the first transmission is an uplink transmission, the first time-domain unit is a time-domain unit containing an uplink sub-band, and the second time-domain unit is an uplink time-domain unit; or the first time-domain unit is the uplink time-domain unit, and the second time-domain unit is the time-domain unit containing the uplink sub-band. When the first transmission is a downlink transmission, the first time-domain unit is a time-domain unit containing a downlink sub-band, and the second time-domain unit is a downlink time-domain unit; or the first time-domain unit is the downlink time-domain unit, and the second time-domain unit is the time-domain unit containing the downlink sub-band.

In this embodiment, the time-domain unit containing the uplink sub-band or the time-domain unit containing the downlink sub-band can be understood as an SBFD time-domain unit or an SBFD type of time-domain unit. The uplink time-domain unit or the downlink time-domain unit can be understood as a non-SBFD time-domain unit or a non-SBFD type of time-domain unit.

As above mentioned, in embodiments of the disclosure, a transmission resource for the uplink transmission and/or downlink transmission is determined based on determination of the time-domain unit for the first transmission, thereby avoiding failure of data transmission due to uncertainty of the transmission resource.

For a case where the first transmission is an uplink transmission

In some embodiments, the first transmission includes an uplink transmission. In some embodiments, the uplink transmission includes at least one of a physical uplink control channel (PUCCH) transmission, a PUSCH transmission, a PUCCH repetition, a PUSCH repetition, or a sounding reference signal (SRS). A PUCCH is used for transmitting uplink control information from the terminal device, a PUSCH is used for transmitting uplink information from the terminal device, and the uplink information includes at least one of uplink control information or uplink data.

When the first transmission is an uplink transmission, the terminal device transmits transmission data to the network device based on a transmission parameter for the uplink transmission, and the network device receives the transmission data from the terminal device.

In some embodiments, as illustrated in FIG. 16, the method further includes the following.

At 420, a transmission parameter for the uplink transmission is determined.

The network device allocates a transmission resource for the uplink transmission of the terminal device. The transmission resource includes a time-domain resource and a frequency-domain resource. The time-domain resource includes at least one type of time-domain unit.

In some embodiments, a time-domain unit allocated for the uplink transmission includes at least one of a time-domain unit containing an uplink sub-band or an uplink time-domain unit. For example, the time-domain unit is a symbol. As illustrated in FIG. 17, a slot includes symbol 0 to symbol 13, where symbol 0 to symbol 7 each are a symbol containing an uplink sub-band, and symbol 8 to symbol 13 each are an uplink symbol. The uplink transmission can be performed on uplink sub-bands in symbol 0 to symbol 7 and can be performed in symbol 8 to symbol 13.

It may be noted that, the time-domain unit containing the uplink sub-band mentioned in embodiments of the disclosure can be understood as a time-domain unit containing both the uplink sub-band and the downlink sub-band, or can be understood as a time-domain unit in which both uplink transmission and downlink transmission can be performed. The symbol containing the uplink sub-band can be understood as a symbol containing both the uplink sub-band and the downlink sub-band, or can be understood as a symbol in which both uplink transmission and downlink transmission can be performed. The uplink time-domain unit mentioned in embodiments of the disclosure can be understood as a time-domain unit containing only the uplink sub-band, a time-domain unit only for the uplink transmission, or a time-domain unit containing only the uplink resource. The uplink symbol mentioned can be understood as a symbol containing only the uplink resource or a symbol only for the uplink transmission. Exemplarily, the time-domain unit allocated for the uplink transmission includes both the time-domain unit containing the uplink sub-band and the uplink time-domain unit. As illustrated in FIG. 17, transmission resources allocated for the uplink transmission are symbol 6 to symbol 9. In this case, time-domain units allocated for the uplink transmission contain two types of time-domain unit.

In some embodiments, a first time-domain unit in two types of time-domain unit is selected for the first transmission. Optionally, resources available for the uplink transmission in the first time-domain unit are more than resources available for the uplink transmission in a second time-domain unit. For example, the first time-domain unit contains a larger quantity of available frequency-domain resources than the second time-domain unit. Alternatively, the first time-domain unit is one type of time-domain unit at the front time-domain position in the two types of time-domain unit. Alternatively, the first time-domain unit has a higher priority or is configured or indicated. Optionally, the number of symbols in the first time-domain unit is greater than or equal to $N$. In some embodiments, the first time-domain unit in the two types of time-domain unit is selected for the first transmission.

In some embodiments, both the two types of time-domain unit are selected for the first transmission. The transmission parameter for the uplink transmission is determined based on one or two types of time-domain unit allocated for the uplink transmission. The transmission parameter includes at least one of a time-domain resource, a frequency-domain resource, or a power parameter. In some embodiments, a time-domain resource for the first transmission is determined based on the one or two types of time-domain unit allocated for the first transmission. In some embodiments, a frequency-domain resource for the first transmission is determined based on the one or two types of time-domain unit allocated for the first transmission. In some embodiments, a power parameter for the first transmission is determined based on the one or two types of time-domain unit allocated for the first transmission.

As above mentioned, in embodiments of the disclosure, when a transmission resource allocated for the uplink transmission may include multiple types of time-domain unit, the transmission parameter for the uplink transmission is determined based on the time-domain unit allocated for the uplink transmission as follows. A corresponding time-domain resource and/or frequency-domain resource and/or power parameter is determined according to the determined time-domain unit, thereby avoiding an error in data transmission caused by different time-domain units.

For a case where the first transmission is an uplink transmission and the transmission parameter includes a time-domain resource

In some embodiments, when two types of time-domain unit are allocated for the uplink transmission, a first time-domain unit is determined as a time-domain resource for the uplink transmission. Optionally, the first time-domain unit is a time-domain unit containing both an uplink sub-band and a downlink sub-band. Alternatively, the first time-domain unit is an uplink time-domain unit.

In some embodiments, when two types of time-domain unit are allocated for the uplink transmission, one type of time-domain unit that contains a larger quantity of available frequency-domain resources in the two types of time-domain unit is determined, and the one type of time-domain unit that contains a larger quantity of available frequency-domain resources is determined as a time-domain resource for the uplink transmission.

In some embodiments, when two types of time-domain unit are allocated for the uplink transmission, one type of time-domain unit at the front time-domain position in the two types of time-domain unit is determined, and the one type of time-domain unit at the front time-domain position is determined as a time-domain resource for the uplink transmission.

In some embodiments, when two types of time-domain unit are allocated for the uplink transmission, one type of time-domain unit that has a higher priority or is configured or indicated in the two types of time-domain unit is determined, and the one type of time-domain unit that has a higher priority or is configured or indicated is determined as a time-domain resource for the uplink transmission.

In some embodiments, when two types of time-domain unit are allocated for the uplink transmission, a time-domain resource for the uplink transmission includes both the two types of time-domain unit (a first time-domain unit and a second time-domain unit).

In some embodiments, as illustrated in FIG. 18, the above operations at 420 includes the following sub-operations.

At 4201, it is determined that a time-domain resource for the uplink transmission includes the first time-domain unit.

The network device allocates a transmission resource for the uplink transmission of the terminal device. The transmission resource includes a time-domain resource and a frequency-domain resource. The time-domain resource includes at least one type of time-domain unit.

When the time-domain unit allocated for the uplink transmission contains two types of time-domain unit, it is determined that the time-domain resource for the uplink transmission includes the first time-domain unit. In some embodiments, when the time-domain unit allocated for the uplink transmission includes both a time-domain unit containing an uplink sub-band and an uplink time-domain unit, it is determined that the time-domain resource for the uplink transmission includes the first time-domain unit. The first time-domain unit is one of the time-domain unit containing the uplink sub-band and the uplink time-domain unit. Optionally, the first time-domain unit is the time-domain unit containing the uplink sub-band. Alternatively, the first time-domain unit is the uplink time-domain unit. The first time-domain unit is pre-defined, or pre-configured, or determined based on a priority, or implemented automatically.

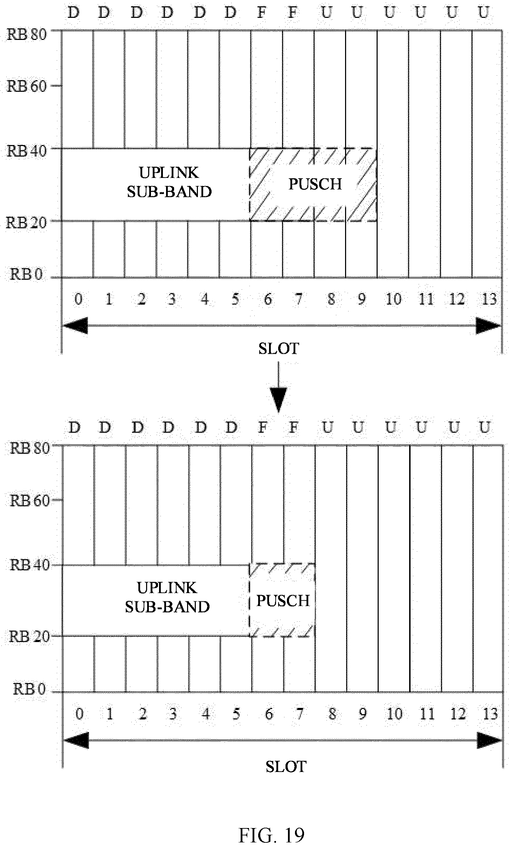

The first time-domain unit is one type of time-domain unit with a relatively large resource quantity in the two types of time-domain unit, and the resource quantity refers to the number of resources of each of the two types of time-domain unit in allocated transmission resources, for example, the number of RBs. Alternatively, the first time-domain unit is one type of time-domain unit at the front time-domain position in the two types of time-domain unit. Exemplarily, as illustrated in FIG. 19, a slot includes symbol 0 to symbol 13, where symbol 0 to symbol 7 each are a time-domain unit containing an uplink sub-band, and symbol 8 to symbol 13 each are an uplink time-domain unit. Transmission resources allocated for a PUSCH are symbol 6 to symbol 9, where symbol 6 and symbol 7 each are the time-domain unit containing the uplink sub-band, and symbol 8 and symbol 9 each are the uplink time-domain unit. That is, time-domain units allocated for the PUSCH contain two types of time-domain unit. Exemplarily, when the first time-domain unit is the time-domain unit containing the uplink sub-band, it is determined that a time-domain resource for PUSCH transmission is the time-domain unit containing the uplink sub-band. As illustrated in FIG. 19, it is determined that time-domain resources for the PUSCH transmission include symbol 6 and symbol 7.

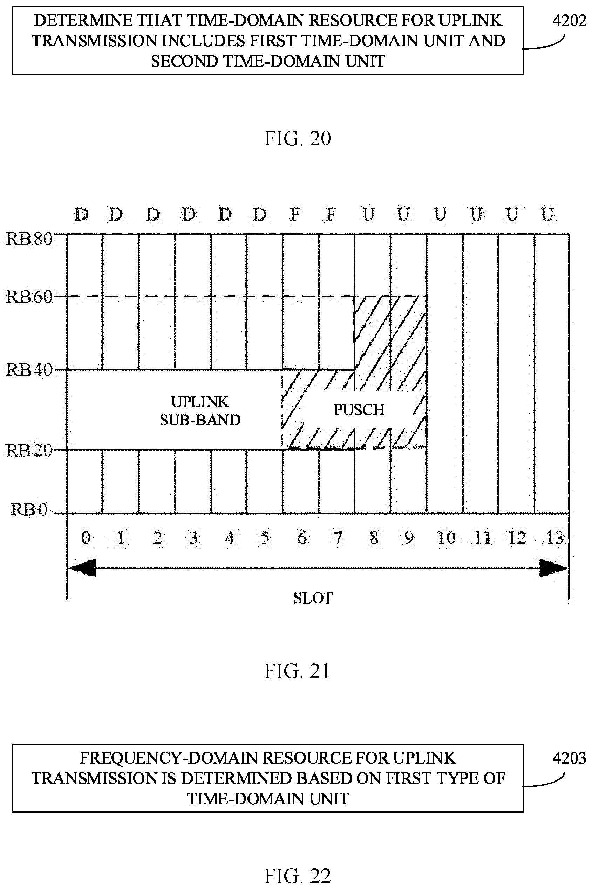

In some embodiments, as illustrated in FIG. 20, the above operations at 420 includes the following sub-operations.

At 4202, it is determined that a time-domain resource for the uplink transmission includes the first time-domain unit and the second time-domain unit.

The network device allocates a transmission resource for the uplink transmission of the terminal device. The transmission resource includes a time-domain resource and a frequency-domain resource, and the time-domain resource includes at least one type of time-domain unit. In some embodiments, when the time-domain unit allocated for the uplink transmission includes both a time-domain unit containing an uplink sub-band and an uplink time-domain unit, it is determined that the time-domain resource for the uplink transmission includes all time-domain units.

Exemplarily, as illustrated in FIG. 21, a slot includes symbol 0 to symbol 13, where symbol 0 to symbol 7 each are a time-domain unit containing an uplink sub-band, and symbol 8 to symbol 13 each are an uplink time-domain unit. Transmission resources allocated for a PUSCH are symbol 6 to symbol 9, where symbol 6 and symbol 7 each are the time-domain unit containing the uplink sub-band, and symbol 8 and symbol 9 each are the uplink time-domain unit. That is, time-domain units allocated for the PUSCH contain two types of time-domain unit. In this case, it is determined that time-domain resources for PUSCH transmission include symbol 6 to symbol 9.

As above mentioned, in embodiments of the disclosure, when a transmission resource allocated for the uplink transmission includes the first time-domain unit and the second time-domain unit, it is directly determined based on the time-domain unit allocated for the uplink transmission that the time-domain resource for the uplink transmission includes all time-domain units in the first time-domain unit and the second time-domain unit.

For a case where the first transmission is an uplink transmission and the transmission parameter includes a frequency-domain resource

In some embodiments, when two types of time-domain unit are allocated for the uplink transmission, a frequency-domain resource available for the uplink transmission in the time-domain unit is determined, and the frequency-domain resource available for the uplink transmission is determined as a frequency-domain resource for the uplink transmission. The frequency-domain resource available for the uplink transmission is a frequency-domain resource whose transmission direction includes an uplink direction.

In some embodiments, when two types of time-domain unit are allocated for the uplink transmission, a frequency-domain resource available for the uplink transmission in the first time-domain unit is determined, and the frequency-domain resource available for the uplink transmission in the first time-domain unit is determined as a frequency-domain resource for the uplink transmission. Optionally, the first time-domain unit is a time-domain unit containing both an uplink sub-band and a downlink sub-band. Alternatively, the first time-domain unit is an uplink time-domain unit.

In some embodiments, when two types of time-domain unit are allocated for the uplink transmission, a frequency-domain resource available for the uplink transmission in the two types of time-domain unit is determined, and the frequency-domain resource available for the uplink transmission in the two types of time-domain unit is determined as a frequency-domain resource for the uplink transmission.

In some embodiments, as illustrated in FIG. 22, the above operations at 420 further includes the following.

At 4203, a frequency-domain resource for the uplink transmission is determined based on the first time-domain unit.

The network device allocates a transmission resource for the uplink transmission of the terminal device. The transmission resource includes a time-domain resource and a frequency-domain resource. The time-domain resource includes at least one type of time-domain unit. When the time-domain unit allocated for the uplink transmission includes the first time-domain unit, the frequency-domain resource for the uplink transmission is determined based on the first time-domain unit.

In some embodiments, a frequency-domain resource for the uplink transmission is determined based on an intersection between an uplink frequency-domain resource corresponding to the first time-domain unit allocated and a frequency-domain resource allocated for the uplink transmission. The frequency-domain resource for the uplink transmission is in a range of the uplink frequency-domain resource corresponding to the first time-domain unit and the frequency-domain resource allocated for the uplink transmission. The terminal does not expect that the frequency-domain resource for the uplink transmission is outside the uplink frequency-domain resource corresponding to the first time-domain unit and the frequency-domain resource allocated for the uplink transmission.

In some embodiments, there are two types of time-domain unit (a first time-domain unit and a second time-domain unit) allocated for the uplink transmission. The first time-domain unit is selected from the two types of time-domain unit. The first time-domain unit is one of a time-domain unit containing an uplink sub-band and an uplink time-domain unit. Optionally, the first time-domain unit is the time-domain unit containing the uplink sub-band. Alternatively, the first time-domain unit is the uplink time-domain unit. The first time-domain unit is pre-defined, or pre-configured, or determined based on a priority, or implemented automatically. A frequency-domain resource for the uplink transmission is determined based on an intersection between an uplink frequency-domain resource corresponding to the first time-domain unit allocated and a frequency-domain resource allocated for the uplink transmission.

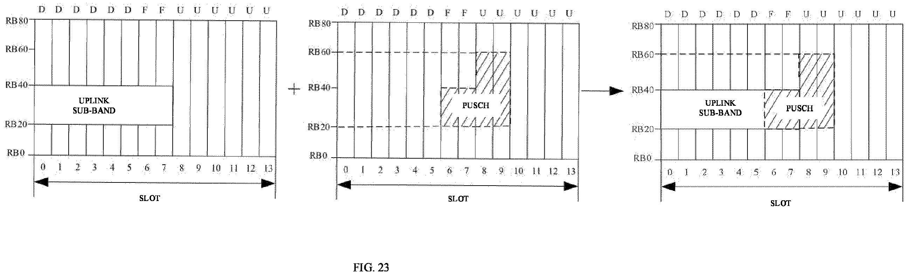

Exemplarily, as illustrated in FIG. 23, a slot includes symbol 0 to symbol 13, where symbol 0 to symbol 7 each are a time-domain unit containing an uplink sub-band, and symbol 8 to symbol 13 each are an uplink time-domain unit. Transmission resources allocated for a PUSCH are symbol 6 to symbol 9, that is, the transmission resources allocated for the PUSCH include two types of time-domain units. Symbol 6 and symbol 7 each are the time-domain unit containing the uplink sub-band, uplink frequency-domain resources corresponding to the time-domain unit containing the uplink sub-band are RB20 to RB40, and frequency-domain resources allocated for the uplink transmission are RB20 to RB60. Based on an intersection between the uplink frequency-domain resources corresponding to the time-domain unit containing the uplink sub-band and the frequency-domain resources allocated for the uplink transmission, it is determined that frequency-domain resources for the uplink transmission in symbol 6 and symbol 7 are RB20 to RB40. Symbol 8 and symbol 9 each are the uplink time-domain unit, uplink frequency-domain resources corresponding to the uplink time-domain unit are RB0 to RB80, and frequency-domain resources allocated for the uplink transmission are RB20 to RB60. Based on an intersection between the uplink frequency-domain resources corresponding to the uplink time-domain unit and the frequency-domain resources allocated for the uplink transmission, it is determined that frequency-domain resources for the uplink transmission in symbol 8 and symbol 9 are RB20 to RB60.

In some embodiments, a frequency-domain parameter for the uplink transmission is determined based on the time-domain unit allocated for the uplink transmission, and the frequency-domain resource for the uplink transmission is further determined based on the frequency-domain parameter for the uplink transmission. The frequency-domain parameter includes at least one of a start value, an offset value, a frequency hopping parameter, a frequency hopping offset, or a frequency-domain bandwidth for calculating the frequency-domain resource. Different time-domain units correspond to different frequency-domain parameters, or there is at least one different frequency-domain parameter among multiple frequency-domain parameters corresponding to different time-domain units.

In some embodiments, when there are two types of time-domain unit allocated for the uplink transmission, different time-domain units correspond to different available frequency-domain ranges. Exemplarily, for a time-domain unit containing both an uplink sub-band and a downlink sub-band, an available frequency-domain range is part of a frequency-domain range corresponding to the uplink sub-band. For an uplink time-domain unit, an available frequency-domain range is the whole frequency-domain range corresponding to a bandwidth of a BWP. In other words, for example, when the frequency-domain parameter includes the frequency-domain bandwidth, a frequency-domain bandwidth of the time-domain unit containing the uplink sub-band is determined based on a bandwidth of the uplink sub-band, and a frequency-domain bandwidth of the uplink time-domain unit is determined based on the bandwidth of the BWP.

As above mentioned, in embodiments of the disclosure, when the time-domain unit allocated for the uplink transmission includes the first time-domain unit, the frequency-domain resource for the uplink transmission is determined based on the first time-domain unit. As such, during the uplink transmission, data transmission can be performed according to the determined frequency-domain resource, thereby avoiding an error in the data transmission caused by multiple types of time-domain unit in the allocated transmission resource.

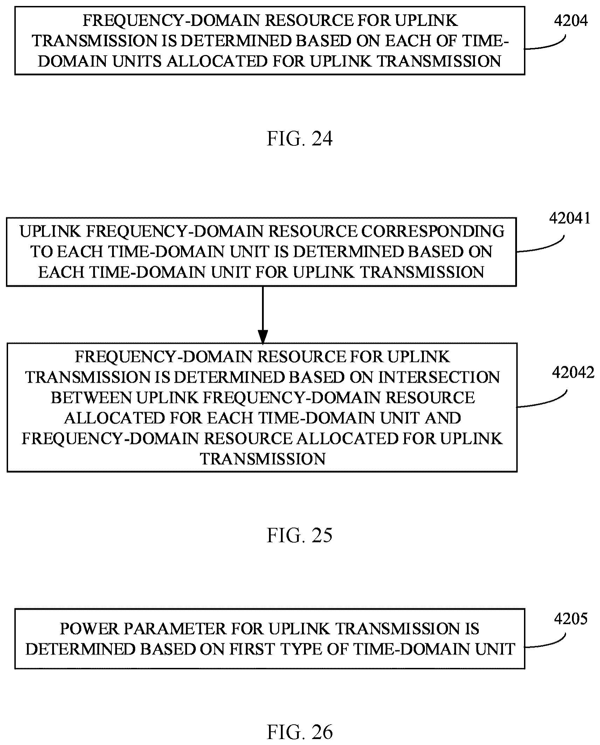

In some embodiments, as illustrated in FIG. 24, the above operations at 420 further includes the following.

At 4204, a frequency-domain resource for the uplink transmission is determined based on each of time-domain units allocated for the uplink transmission.

In some embodiments, a time-domain unit for the uplink transmission includes at least one of a time-domain unit containing an uplink sub-band or an uplink time-domain unit. Taking one time-domain unit as a unit, a frequency-domain resource corresponding to each time-domain unit is determined based on each time-domain unit for the uplink transmission. In some embodiments, the time-domain unit includes at least one of a sub-frame, a slot, or a symbol. In embodiments of the disclosure, for example, the time-domain unit is a symbol.

In some embodiments, when there are two types of time-domain unit (a first time-domain unit and a second time-domain unit) for the uplink transmission, a frequency-domain resource corresponding to each time-domain unit in the first time-domain unit is determined based on the first time-domain unit, and a frequency-domain resource corresponding to each time-domain unit in the second time-domain unit is determined based on the second time-domain unit. Exemplarily, the time-domain unit for the uplink transmission includes both a time-domain unit containing an uplink sub-band and an uplink time-domain unit, that is, some time-domain units for the uplink transmission are the time-domain unit containing the uplink sub-band, and the other time-domain units for the uplink transmission are the uplink time-domain unit. When a time-domain unit is a time-domain unit containing an uplink sub-band, a frequency-domain resource corresponding to the time-domain unit is determined based on the time-domain unit being the time-domain unit containing the uplink sub-band. When a time-domain unit is an uplink time-domain unit, a frequency-domain resource corresponding to the time-domain unit is determined based on the time-domain unit being the uplink time-domain unit.

Exemplarily, as illustrated in FIG. 21, a slot includes symbol 0 to symbol 13, where symbol 0 to symbol 7 each are a time-domain unit containing an uplink sub-band, and symbol 8 to symbol 13 each are an uplink time-domain unit, and transmission resources allocated for a PUSCH are symbol 6 to symbol 9. Taking one symbol as a unit, a frequency-domain resource in symbol 6 is determined based on a time-domain unit for the uplink transmission in symbol 6 being the time-domain unit containing the uplink sub-band. A frequency-domain resource in symbol 7 is determined based on a time-domain unit for the uplink transmission in symbol 7 being the time-domain unit containing the uplink sub-band. A frequency-domain resource in symbol 8 is determined based on a time-domain unit for the uplink transmission in symbol 8 being the uplink time-domain unit. A frequency-domain resource in symbol 9 is determined based on a time-domain unit for the uplink transmission in symbol 9 being the uplink time-domain unit.

In some embodiments, as illustrated in FIG. 25, the above operations at 4204 may also be replaced with the following sub-operations.

At 42041, an uplink frequency-domain resource corresponding to each time-domain unit is determined based on each time-domain unit for the uplink transmission.

In some embodiments, a time-domain unit for the uplink transmission includes at least one of a time-domain unit containing an uplink sub-band or an uplink time-domain unit. Taking one time-domain unit as a unit, an uplink frequency-domain resource corresponding to each time-domain unit is determined based on each time-domain unit for the uplink transmission.

In some embodiments, when there are two types of time-domain unit (a first time-domain unit and a second time-domain unit) for the uplink transmission, an uplink frequency-domain resource corresponding to each time-domain unit in the first time-domain unit is determined based on the first time-domain unit, and an uplink frequency-domain resource corresponding to each time-domain unit in the second time-domain unit is determined based on the second time-domain unit. Exemplarily, the time-domain unit for the uplink transmission includes both a time-domain unit containing an uplink sub-band and an uplink time-domain unit, that is, some time-domain units for the uplink transmission are the time-domain unit containing the uplink sub-band, and the other time-domain units for the uplink transmission are the uplink time-domain unit. When a time-domain unit is a time-domain unit containing an uplink sub-band, an uplink frequency-domain resource corresponding to the time-domain unit is determined based on the time-domain unit being the time-domain unit containing the uplink sub-band. When a time-domain unit is an uplink time-domain unit, an uplink frequency-domain resource corresponding to the time-domain unit is determined based on the time-domain unit being the uplink time-domain unit.

Exemplarily, as illustrated in FIG. 21, a slot includes symbol 0 to symbol 13, where symbol 0 to symbol 7 each are a time-domain unit containing an uplink sub-band, and symbol 8 to symbol 13 each are an uplink time-domain unit, and transmission resources allocated for a PUSCH are symbol 6 to symbol 9. Taking one symbol as a unit, based on a time-domain unit for the uplink transmission in symbol 6 being the time-domain unit containing the uplink sub-band, it is determined that an uplink frequency-domain resource in symbol 6 is a frequency-domain resource containing the uplink sub-band on symbol 6. Based on a time-domain unit for the uplink transmission in symbol 7 being the time-domain unit containing the uplink sub-band, it is determined that an uplink frequency-domain resource in symbol 7 is a frequency-domain resource containing the uplink sub-band on symbol 7. Based on a time-domain unit for the uplink transmission in symbol 8 being the uplink time-domain unit, it is determined that an uplink frequency-domain resource in symbol 8 is each frequency-domain resource on symbol 8. Based on a time-domain unit for the uplink transmission in symbol 9 being the uplink time-domain unit, it is determined that an uplink frequency-domain resource in symbol 9 is each frequency-domain resource on symbol 9.

At 42042, a frequency-domain resource for the uplink transmission is determined based on an intersection between an uplink frequency-domain resource corresponding to each time-domain unit allocated and a frequency-domain resource allocated for the uplink transmission.

In some embodiments, the frequency-domain resource for the uplink transmission is determined based on the intersection between the uplink frequency-domain resource corresponding to each time-domain unit allocated and the frequency-domain resource allocated for the uplink transmission. The frequency-domain resource for the uplink transmission is in a range of the uplink frequency-domain resource corresponding to each time-domain unit and the frequency-domain resource allocated for the uplink transmission. The terminal does not expect that the frequency-domain resource for the uplink transmission is outside the uplink frequency-domain resource corresponding to each time-domain unit and the frequency-domain resource allocated for the uplink transmission.

In some embodiments, a time-domain unit for the uplink transmission includes at least one of a time-domain unit containing an uplink sub-band or an uplink time-domain unit. Taking one time-domain unit as a unit, the frequency-domain resource for the uplink transmission is determined based on the intersection between the uplink frequency-domain resources corresponding to each time-domain unit and the frequency-domain resource allocated for the uplink transmission.

In some embodiments, when there are two types of time-domain unit (a first time-domain unit and a second time-domain unit) for the uplink transmission, a frequency-domain resource for the uplink transmission in the first time-domain unit is determined based on an intersection between an uplink frequency-domain resource corresponding to the first time-domain unit and a frequency-domain resource allocated for the uplink transmission, and a frequency-domain resource for the uplink transmission in the first time-domain unit is determined based on an intersection between an uplink frequency-domain resource corresponding to the first time-domain unit and a frequency-domain resource allocated for the uplink transmission. Exemplarily, the time-domain unit for the uplink transmission includes a time-domain unit containing an uplink sub-band and an uplink time-domain unit, that is, some time-domain units for the uplink transmission are the time-domain unit containing the uplink sub-band, and the other time-domain units for the uplink transmission are the uplink time-domain unit. When a time-domain unit is a time-domain unit containing an uplink sub-band, a frequency-domain resource for the uplink transmission in the time-domain unit is determined based on an intersection between an uplink frequency-domain resource corresponding to the time-domain unit containing the uplink sub-band and a frequency-domain resource allocated for the uplink transmission. When a time-domain unit is an uplink time-domain unit, a frequency-domain resource for the uplink transmission in the time-domain unit is determined based on an intersection between an uplink frequency-domain resource corresponding to the uplink time-domain unit and a frequency-domain resource allocated for the uplink transmission.

Exemplarily, as illustrated in FIG. 23, a slot includes symbol 0 to symbol 13, where symbol 0 to symbol 7 each are a time-domain unit containing an uplink sub-band, and symbol 8 to symbol 13 each are an uplink time-domain unit. Transmission resources allocated for a PUSCH are symbol 6 to symbol 9, that is, there are two types of time-domain unit allocated for the PUSCH. Symbol 6 is the time-domain unit containing the uplink sub-band, uplink frequency-domain resources corresponding to the time-domain unit containing the uplink sub-band are RB20 to RB40, and frequency-domain resources allocated for the uplink transmission are RB20 to RB60. Based on an intersection between the uplink frequency-domain resources corresponding to the time-domain unit containing the uplink sub-band and the frequency-domain resources allocated for the uplink transmission, it is determined that frequency-domain resources for the uplink transmission in symbol 6 are RB20 to RB40. Symbol 7 is the time-domain unit containing the uplink sub-band, uplink frequency-domain resources corresponding to the time-domain unit containing the uplink sub-band are RB20 to RB40, and frequency-domain resources allocated for the uplink transmission are RB20 to RB60. Based on an intersection between the uplink frequency-domain resources corresponding to the time-domain unit containing the uplink sub-band and the frequency-domain resources allocated for the uplink transmission, it is determined that frequency-domain resources for the uplink transmission in symbol 7 are RB20 to RB40. Symbol 8 is the uplink time-domain unit, uplink frequency-domain resources corresponding to the uplink time-domain unit are RB0 to RB80, and frequency-domain resources allocated for the uplink transmission are RB20 to RB60. Based on an intersection between the uplink frequency-domain resources corresponding to the uplink time-domain unit and the frequency-domain resources allocated for the uplink transmission, it is determined that frequency-domain resources for the uplink transmission in symbol 8 are RB20 to RB60. Symbol 9 is the uplink time-domain unit, uplink frequency-domain resources corresponding to the uplink time-domain unit are RB0 to RB80, and frequency-domain resources allocated for the uplink transmission are RB20 to RB60. Based on an intersection between the uplink frequency-domain resources corresponding to the uplink time-domain unit and the frequency-domain resources allocated for the uplink transmission, it is determined that frequency-domain resources for the uplink transmission in symbol 9 are RB20 to RB60.

As above mentioned, in embodiments of the disclosure, a frequency-domain resource corresponding to each time-domain unit is determined based on each time-domain unit for the uplink transmission. As such, for each time-domain unit, data transmission can be performed according to the determined frequency-domain resource during the uplink transmission, thereby avoiding an error in the data transmission caused by multiple types of time-domain unit in the allocated transmission resource.

For a case where the first transmission is an uplink transmission and the transmission parameter includes a power parameter

In some embodiments, when two types of time-domain unit are allocated for the uplink transmission, a first time-domain unit is determined, and a power parameter configured for the first time-domain unit and/or the number of frequency-domain resources corresponding to the first time-domain unit is determined as a power parameter for the uplink transmission. Optionally, the first time-domain unit is a time-domain unit containing both an uplink sub-band and a downlink sub-band. Alternatively, the first time-domain unit is an uplink time-domain unit.

In some embodiments, when two types of time-domain unit are allocated for the uplink transmission, the two types of time-domain unit (a first time-domain unit and a second time-domain unit) are determined. A power parameter configured for the first time-domain unit and/or the number of frequency-domain resources corresponding to the first time-domain unit is determined as a power parameter for the uplink transmission in the first time-domain unit. A power parameter configured for the second time-domain unit and/or the number of frequency-domain resources corresponding to the second time-domain unit is determined as a power parameter for the uplink transmission in the second time-domain unit.

In some embodiments, as illustrated in FIG. 26, the above operations at 420 includes the following sub-operations.

At 4205, a power parameter for the uplink transmission is determined based on the first time-domain unit.

The network device allocates a transmission resource for the uplink transmission of the terminal device. The transmission resource includes a time-domain resource and a frequency-domain resource. The time-domain resource includes at least one type of time-domain unit.

In some embodiments, when a time-domain unit allocated for the uplink transmission includes a first time-domain unit, the power parameter for the uplink transmission is determined based on the first time-domain unit. The power parameter for the uplink transmission includes at least one of a power parameter configured for the first time-domain unit or the number of frequency-domain resources corresponding to the first time-domain unit. The number of frequency-domain resources corresponding to the first time-domain unit refers to the number of frequency-domain resources available for the uplink transmission in the first time-domain unit.

In some embodiments, a transmission resource allocated for the uplink transmission includes two types of time-domain unit (a first time-domain unit and a second time-domain unit). One type of time-domain unit (the first time-domain unit) is selected from the two types of time-domain unit. The first time-domain unit is one of a time-domain unit containing an uplink sub-band and an uplink time-domain unit. Optionally, the first time-domain unit is the time-domain unit containing the uplink sub-band. Alternatively, the first time-domain unit is the uplink time-domain unit. The first time-domain unit is pre-defined, or pre-configured, or determined based on a priority, or implemented automatically. The power parameter for the uplink transmission is determined based on a power parameter for the first time-domain unit and/or the number of frequency-domain resources corresponding to the first time-domain unit.

As above mentioned, in embodiments of the disclosure, when the time-domain unit allocated for the uplink transmission includes a first time-domain unit, the power parameter for the uplink transmission is determined based on the first time-domain unit. As such, during the uplink transmission, data transmission can be performed according to the determined power parameter, thereby avoiding an error in the data transmission caused by multiple types of time-domain unit in the time-domain unit.

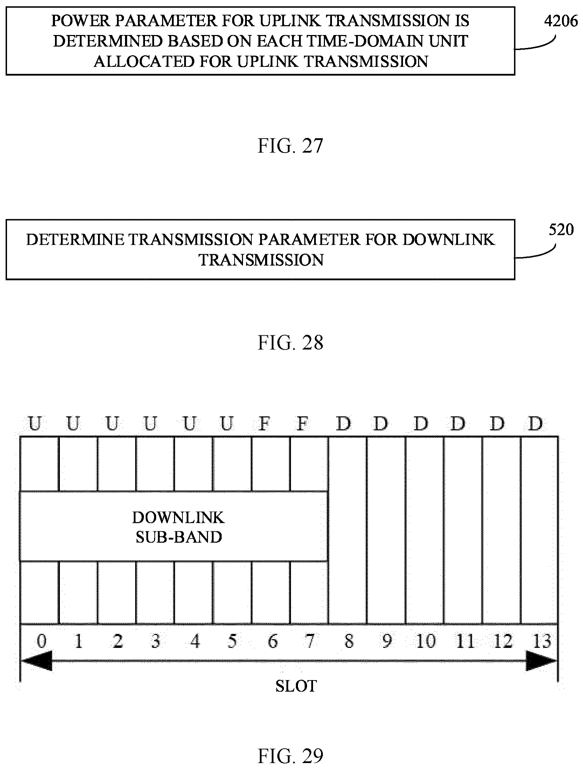

In some embodiments, as illustrated in FIG. 27, the above operations at 420 includes the following sub-operations.

At 4206, a power parameter for the uplink transmission is determined based on each time-domain unit allocated for the uplink transmission.

In some embodiments, a different power parameter is configured for each time-domain unit, or there is at least one different parameter among power parameters corresponding to each time-domain unit. For example, a first power parameter is configured for a time-domain unit containing an uplink sub-band, and a second power parameter is configured for an uplink time-domain unit.

In some embodiments, a power parameter for each time-domain unit is determined based on each time-domain unit for the uplink transmission.

In some embodiments, a time-domain unit for the uplink transmission includes at least one of a time-domain unit containing an uplink sub-band or an uplink time-domain unit. Taking one time-domain unit as a unit, a power parameter for each time-domain unit is determined based on each time-domain unit for the uplink transmission. In some embodiments, the time-domain unit includes at least one of a sub-frame, a slot, or a symbol. In embodiments of the disclosure, for example, the time-domain unit is a symbol. The power parameter for the uplink transmission includes at least one of a power parameter configured for each time-domain unit or the number of frequency-domain resources corresponding to each time-domain unit.

In some embodiments, when there are two types of time-domain unit (a first time-domain unit and a second time-domain unit) for the uplink transmission, a power parameter for each time-domain unit in the first time-domain unit is determined based on the first time-domain unit, and a power parameter for each time-domain unit in the second time-domain unit is determined based on the second time-domain unit. Exemplarily, the time-domain unit for the uplink transmission includes both a time-domain unit containing an uplink sub-band and an uplink time-domain unit, that is, some time-domain units for the uplink transmission are the time-domain unit containing the uplink sub-band, and the other time-domain units are the uplink time-domain unit. When a time-domain unit is a time-domain unit containing an uplink sub-band, a power parameter for the time-domain unit is determined based on the time-domain unit being the time-domain unit containing the uplink sub-band. When a time-domain unit is an uplink time-domain unit, a power parameter for the time-domain unit is determined based on the time-domain unit being the uplink time-domain unit.

As above mentioned, in embodiments of the disclosure, a power parameter for each time-domain unit is determined based on each time-domain unit for the uplink transmission. As such, for each time-domain unit, data transmission can be performed according to the determined power parameter during the uplink transmission, thereby avoiding an error in the data transmission caused by multiple types of time-domain unit in the allocated transmission resource.

It may be noted that, the above time-domain resource, frequency-domain resource, and power parameter for the uplink transmission can be combined in pairs or in groups of three according to the understanding of those skilled in the art, to form a new embodiment for implementation.

For a case where the first transmission is a downlink transmission

In some embodiments, the first transmission includes a downlink transmission. In some embodiments, the downlink transmission includes at least one of a physical downlink control channel (PDCCH) transmission, a PDSCH transmission, a PDCCH repetition, a PDSCH repetition, or a channel state information-reference signal (CSI-RS). The CSI-RS may be at least one of an aperiodic CSI-RS (AP-CSI-RS), a periodic CSI-RS (P-CSI-RS), a non-zero power CSI-RS (NZP-CSI-RS), or a zero power CSI-RS (ZP-CSI-RS).

When the first transmission is a downlink transmission, the network device transmits transmission data to the terminal device based on a transmission parameter for the downlink transmission, and the terminal device receives the transmission data from the network device.

In some embodiments, as illustrated in FIG. 28, the method further includes the following.

At 520, a transmission parameter for the downlink transmission is determined.

In some embodiments, a time-domain unit allocated for the downlink transmission includes at least one of a time-domain unit containing a downlink sub-band or a downlink time-domain unit. For example, the time-domain unit is a symbol. As illustrated in FIG. 29, a slot includes symbol 0 to symbol 13, where symbol 0 to symbol 7 each are a symbol containing a downlink sub-band, and symbol 8 to symbol 13 each are a downlink symbol. The downlink transmission can be performed on downlink sub-bands in symbol 0 to symbol 7 and can be performed in symbol 8 to symbol 13.

It may be noted that, the time-domain unit containing the downlink sub-band mentioned in embodiments of the disclosure can be understood as a time-domain unit containing both the uplink sub-band and the downlink sub-band, or can be understood as a time-domain unit in which both uplink transmission and downlink transmission can be performed. The symbol containing the downlink sub-band can be understood as a symbol containing both the uplink sub-band and the downlink sub-band, or can be understood as a symbol in which both uplink transmission and downlink transmission can be performed. The downlink time-domain unit mentioned in embodiments of the disclosure can be understood as a time-domain unit containing only the downlink sub-band, a time-domain unit only for the downlink transmission, or a time-domain unit containing only the downlink resource. The downlink symbol mentioned can be understood as a symbol containing only the downlink resource or a symbol only for the downlink transmission. Exemplarily, the time-domain unit allocated for the downlink transmission includes both the time-domain unit containing the downlink sub-band and the downlink time-domain unit. As illustrated in FIG. 29, transmission resources allocated for the downlink transmission are symbol 6 to symbol 9. In this case, time-domain units allocated for the downlink transmission contain two types of time-domain unit.

In some embodiments, a first time-domain unit in two types of time-domain unit is selected for the first transmission. Optionally, resources available for the downlink transmission in the first time-domain unit are more than resources available for the downlink transmission in a second time-domain unit. For example, the first time-domain unit contains a larger quantity of available frequency-domain resources than the second time-domain unit. Alternatively, the first time-domain unit is one type of time-domain unit at the front time-domain position in the two types of time-domain unit. Alternatively, the first time-domain unit has a higher priority or is configured or indicated. Optionally, the number of symbols in the first time-domain unit is greater than or equal to *N*. In some embodiments, the first time-domain unit in the two types of time-domain unit is selected for the first transmission.

The transmission parameter for the downlink transmission is determined based on the time-domain unit allocated for the downlink transmission. The transmission parameter includes at least one of a time-domain resource, a frequency-domain resource, or a power parameter. In some embodiments, a time-domain resource for the first transmission is determined based on the time-domain unit allocated for the first transmission. In some embodiments, a frequency-domain resource for the first transmission is determined based on the time-domain unit allocated for the first transmission. In some embodiments, a power parameter for the first transmission is determined based on the time-domain unit allocated for the first transmission.

As above mentioned, in embodiments of the disclosure, when a transmission resource allocated for the downlink transmission may include multiple types of time-domain unit, the transmission parameter for the downlink transmission is determined based on the time-domain unit allocated for the downlink transmission as follows. A corresponding time-domain resource and/or frequency-domain resource and/or power parameter is determined according to the determined time-domain unit, thereby avoiding an error in data transmission caused by different time-domain units.

For a case where the first transmission is a downlink transmission and the transmission parameter includes a time-domain resource

In some embodiments, when two types of time-domain unit are allocated for the downlink transmission, a first time-domain unit is determined as a time-domain resource for the downlink transmission. Optionally, the first time-domain unit is a time-domain unit containing both an uplink sub-band and a downlink sub-band. Alternatively, the first time-domain unit is a downlink time-domain unit.

In some embodiments, when two types of time-domain unit are allocated for the downlink transmission, one type of time-domain unit that contains a larger quantity of available frequency-domain resources in the two types of time-domain unit is determined, and the one type of time-domain unit that contains a larger quantity of available frequency-domain resources is determined as a time-domain resource for the downlink transmission.

In some embodiments, when two types of time-domain unit are allocated for the downlink transmission, one type of time-domain unit at the front time-domain position in the two types of time-domain unit is determined, and the one type of time-domain unit at the front time-domain position is determined as a time-domain resource for the downlink transmission.

In some embodiments, when two types of time-domain unit are allocated for the downlink transmission, one type of time-domain unit that has a higher priority or is configured or indicated in the two types of time-domain unit is determined, and the one type of time-domain unit that has a higher priority or is configured or indicated is determined as a time-domain resource for the downlink transmission.

In some embodiments, when two types of time-domain unit are allocated for the downlink transmission, it is determined that a first time-domain unit and a second time-domain unit are time-domain resources for the downlink transmission.

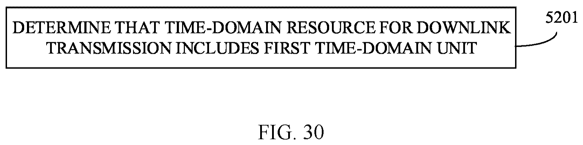

In some embodiments, as illustrated in FIG. 30, the above operations at 520 includes the following sub-operations.

At 5201, it is determined that a time-domain resource for the downlink transmission includes the first time-domain unit.

When the time-domain unit allocated for the downlink transmission contains two types of time-domain unit, it is determined that the time-domain resource for the downlink transmission includes the first time-domain unit.

In some embodiments, when the time-domain unit allocated for the downlink transmission includes both a time-domain unit containing a downlink sub-band and a downlink time-domain unit, it is determined that the time-domain resource for the downlink transmission includes the first time-domain unit. The first time-domain unit is one of the time-domain unit containing the downlink sub-band and the downlink time-domain unit. Optionally, the first time-domain unit is the time-domain unit containing the downlink sub-band. Alternatively, the first time-domain unit is the downlink time-domain unit. The first time-domain unit is pre-defined, or pre-configured, or determined based on a priority, or implemented automatically.

The first time-domain unit is one type of time-domain unit with a relatively large resource quantity in the two types of time-domain unit, and the resource quantity refers to the number of resources of each of the two types of time-domain unit in allocated transmission resources, for example, the number of RBs. Alternatively, the first time-domain unit is one type of time-domain unit at the front time-domain position in the two types of time-domain unit.

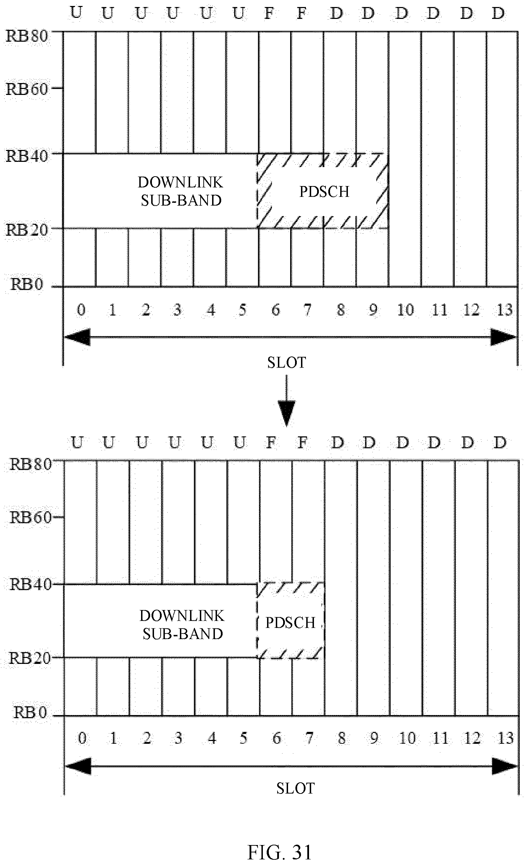

Exemplarily, as illustrated in FIG. 31, a slot includes symbol 0 to symbol 13, where symbol 0 to symbol 7 each are a time-domain unit containing a downlink sub-band, and symbol 8 to symbol 13 each are a downlink time-domain unit. Transmission resources allocated for a PDSCH are symbol 6 to symbol 9, where symbol 6 and symbol 7 each are the time-domain unit containing the downlink sub-band, and symbol 8 and symbol 9 each are the downlink time-domain unit. That is, time-domain units allocated for the PDSCH contain two types of time-domain unit. Exemplarily, when the first time-domain unit is the time-domain unit containing the downlink sub-band, it is determined that a time-domain resource for PDSCH transmission is the time-domain unit containing the downlink sub-band. As illustrated in FIG. 31, it is determined that time-domain resources for the PDSCH transmission include symbol 6 and symbol 7.

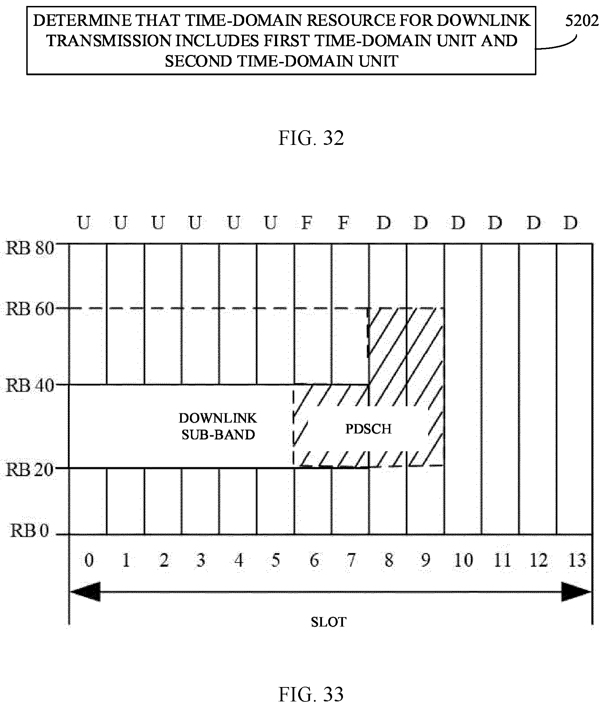

In some embodiments, as illustrated in FIG. 32, the above operations at 520 includes the following sub-operations.

At 5202, it is determined that a time-domain resource for the downlink transmission includes the first time-domain unit and the second time-domain unit.

In some embodiments, when the time-domain unit allocated for the downlink transmission includes both a time-domain unit containing a downlink sub-band and a downlink time-domain unit, it is determined that the time-domain resource for the downlink transmission includes all time-domain units.

Exemplarily, as illustrated in FIG. 33, a slot includes symbol 0 to symbol 13, where symbol 0 to symbol 7 each are a time-domain unit containing a downlink sub-band, and symbol 8 to symbol 13 each are a downlink time-domain unit. Transmission resources allocated for a PDSCH are symbol 6 to symbol 9, where symbol 6 and symbol 7 each are the time-domain unit containing the downlink sub-band, and symbol 8 and symbol 9 each are the downlink time-domain unit. That is, time-domain units allocated for the PDSCH contain two types of time-domain unit. In this case, it is determined that time-domain resources for PDSCH transmission include symbol 6 to symbol 9.

As above mentioned, in embodiments of the disclosure, when a transmission resource allocated for the downlink transmission includes the first time-domain unit and the second time-domain unit, it is directly determined based on the time-domain unit allocated for the downlink transmission that the time-domain resource for the downlink transmission includes all time-domain units in the first time-domain unit and the second time-domain unit.

For a case where the first transmission is a downlink transmission and the transmission parameter includes a frequency-domain resource

In some embodiments, when two types of time-domain unit are allocated for the downlink transmission, a frequency-domain resource available for the downlink transmission in the time-domain unit is determined, and the frequency-domain resource available for the downlink transmission is determined as a frequency-domain resource for the downlink transmission. The frequency-domain resource available for the downlink transmission is a frequency-domain resource whose transmission direction includes a downlink direction.

In some embodiments, when two types of time-domain unit are allocated for the downlink transmission, a frequency-domain resource available for the downlink transmission in the first time-domain unit is determined, and the frequency-domain resource available for the downlink transmission in the first time-domain unit is determined as a frequency-domain resource for the downlink transmission. Optionally, the first time-domain unit is a time-domain unit containing both an uplink sub-band and a downlink sub-band. Alternatively, the first time-domain unit is a downlink time-domain unit.

In some embodiments, when two types of time-domain unit are allocated for the downlink transmission, a frequency-domain resource available for the downlink transmission in the two types of time-domain unit is determined, and the frequency-domain resource available for the downlink transmission in the two types of time-domain unit is determined as a frequency-domain resource for the downlink transmission.

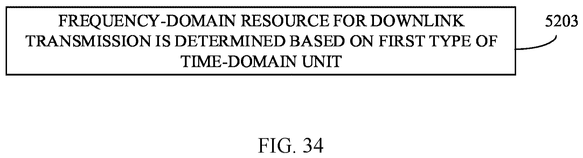

In some embodiments, as illustrated in FIG. 34, the above operations at 520 further includes the following.

At 5203, the frequency-domain resource for the downlink transmission is determined based on the first time-domain unit.

When the time-domain unit allocated for the downlink transmission includes the first time-domain unit, the frequency-domain resource for the downlink transmission is determined based on the first time-domain unit.

In some embodiments, a frequency-domain resource for the downlink transmission is determined based on an intersection between a downlink frequency-domain resource corresponding to the first time-domain unit allocated and a frequency-domain resource allocated for the downlink transmission. The frequency-domain resource for the downlink transmission is in a range of the downlink frequency-domain resource corresponding to the first time-domain unit and the frequency-domain resource allocated for the downlink transmission. The terminal does not expect that the frequency-domain resource for the downlink transmission is outside the downlink frequency-domain resource corresponding to the first time-domain unit and the frequency-domain resource allocated for the downlink transmission.

In some embodiments, there are two types of time-domain unit (a first time-domain unit and a second time-domain unit) allocated for the downlink transmission. The first time-domain unit is selected from the two types of time-domain unit. The first time-domain unit is one of a time-domain unit containing a downlink sub-band and a downlink time-domain unit. Optionally, the first time-domain unit is the time-domain unit containing the downlink sub-band. Alternatively, the first time-domain unit is the downlink time-domain unit. The first time-domain unit is pre-defined, or pre-configured, or determined based on a priority, or implemented automatically. A frequency-domain resource for the downlink transmission is determined based on an intersection between a downlink frequency-domain resource corresponding to the first time-domain unit allocated and a frequency-domain resource allocated for the downlink transmission.

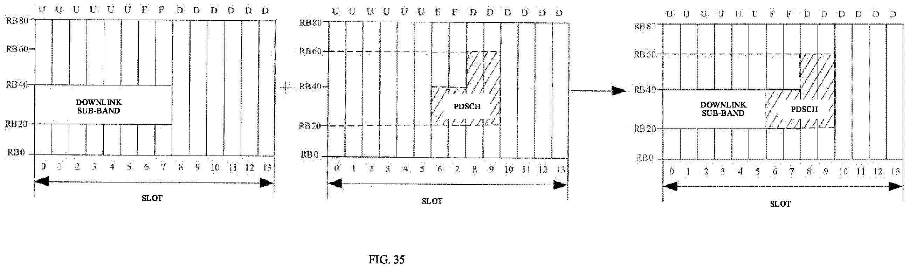

Exemplarily, as illustrated in FIG. 35, a slot includes symbol 0 to symbol 13, where symbol 0 to symbol 7 each are a time-domain unit containing a downlink sub-band, and symbol 8 to symbol 13 each are a downlink time-domain unit. Transmission resources allocated for a PDSCH are symbol 6 to symbol 9, that is, the transmission resources allocated for the PDSCH include two types of time-domain units. Symbol 6 and symbol 7 each are the time-domain unit containing the downlink sub-band, downlink frequency-domain resources corresponding to the time-domain unit containing the downlink sub-band are RB20 to RB40, and frequency-domain resources allocated for the downlink transmission are RB20 to RB60. Based on an intersection between the downlink frequency-domain resources corresponding to the time-domain unit containing the downlink sub-band and the frequency-domain resources allocated for the downlink transmission, it is determined that frequency-domain resources for the downlink transmission in symbol 6 and symbol 7 are RB20 to RB40. Symbol 8 and symbol 9 each are the downlink time-domain unit, downlink frequency-domain resources corresponding to the downlink time-domain unit are RB0 to RB80, and frequency-domain resources allocated for the downlink transmission are RB20 to RB60. Based on an intersection between the downlink frequency-domain resources corresponding to the downlink time-domain unit and the frequency-domain resources allocated for the downlink transmission, it is determined that frequency-domain resources for the downlink transmission in symbol 8 and symbol 9 are RB20 to RB60.

In some embodiments, a frequency-domain parameter for the downlink transmission is determined based on the time-domain unit allocated for the downlink transmission, and the frequency-domain resource for the downlink transmission is further determined based on the frequency-domain parameter for the downlink transmission. The frequency-domain parameter includes at least one of a start value, an offset value, a frequency hopping parameter, a frequency hopping offset, or a frequency-domain bandwidth for calculating the frequency-domain resource. Different time-domain units correspond to different frequency-domain parameters, or there is at least one different frequency-domain parameter among multiple frequency-domain parameters corresponding to different time-domain units.

In some embodiments, when there are two types of time-domain unit allocated for the downlink transmission, different time-domain units correspond to different available frequency-domain ranges. Exemplarily, for a time-domain unit containing both an uplink sub-band and a downlink sub-band, an available frequency-domain range is part of a frequency-domain range corresponding to the downlink sub-band. For a downlink time-domain unit, an available frequency-domain range is the whole frequency-domain range corresponding to a bandwidth of a BWP. In other words, for example, when the frequency-domain parameter includes the frequency-domain bandwidth, a frequency-domain bandwidth of the time-domain unit containing the downlink sub-band is determined based on a bandwidth of the downlink sub-band, and a frequency-domain bandwidth of the downlink time-domain unit is determined based on the bandwidth of the BWP.

As above mentioned, in embodiments of the disclosure, when the time-domain unit allocated for the downlink transmission includes the first time-domain unit, the frequency-domain resource for the downlink transmission is determined based on the first time-domain unit. As such, during the downlink transmission, data transmission can be performed according to the determined frequency-domain resource, thereby avoiding an error in the data transmission caused by multiple types of time-domain unit in the allocated transmission resource.

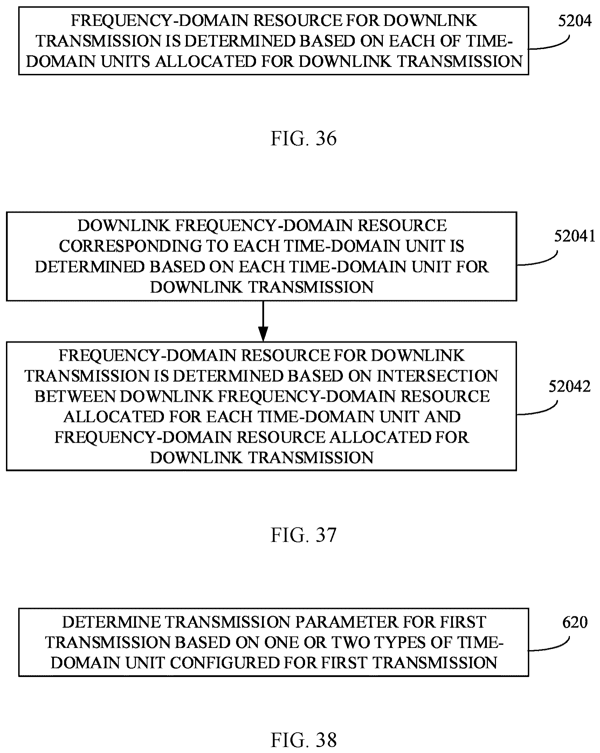

In some embodiments, as illustrated in FIG. 36, the above operations at 520 includes the following sub-operations.

At 5204, a frequency-domain resource for the downlink transmission is determined based on each of time-domain units allocated for the downlink transmission.

In some embodiments, a time-domain unit for the downlink transmission includes at least one of a time-domain unit containing a downlink sub-band or a downlink time-domain unit. Taking one time-domain unit as a unit, a frequency-domain resource corresponding to each time-domain unit is determined based on each time-domain unit for the downlink transmission. In some embodiments, the time-domain unit includes at least one of a sub-frame, a slot, or a symbol. In embodiments of the disclosure, for example, the time-domain unit is a symbol.

In some embodiments, when there are two types of time-domain unit (a first time-domain unit and a second time-domain unit) for the downlink transmission, a frequency-domain resource corresponding to each time-domain unit in the first time-domain unit is determined based on the first time-domain unit, and a frequency-domain resource corresponding to each time-domain unit in the second time-domain unit is determined based on the second time-domain unit. Exemplarily, the time-domain unit for the downlink transmission includes both a time-domain unit containing a downlink sub-band and a downlink time-domain unit, that is, some time-domain units for the downlink transmission are the time-domain unit containing the downlink sub-band, and the other time-domain units for the downlink transmission are the downlink time-domain unit. When a time-domain unit is a time-domain unit containing a downlink sub-band, a frequency-domain resource corresponding to the time-domain unit is determined based on the time-domain unit being the time-domain unit containing the downlink sub-band. When a time-domain unit is a downlink time-domain unit, a frequency-domain resource corresponding to the time-domain unit is determined based on the time-domain unit being the downlink time-domain unit.

Exemplarily, as illustrated in FIG. 33, a slot includes symbol 0 to symbol 13, where symbol 0 to symbol 7 each are a time-domain unit containing a downlink sub-band, and symbol 8 to symbol 13 each are a downlink time-domain unit, and transmission resources allocated for a PDSCH are symbol 6 to symbol 9. Taking one symbol as a unit, a frequency-domain resource in symbol 6 is determined based on a time-domain unit for downlink transmission in symbol 6 being the time-domain unit containing the downlink sub-band. A frequency-domain resource in symbol 7 is determined based on a time-domain unit for downlink transmission in symbol 7 being the time-domain unit containing the downlink sub-band. A frequency-domain resource in symbol 8 is determined based on a time-domain unit for downlink transmission in symbol 8 being the downlink time-domain unit. A frequency-domain resource in symbol 9 is determined based on a time-domain unit for downlink transmission in symbol 9 being the downlink time-domain unit.

In some embodiments, as illustrated in FIG. 37, the above operations at 5204 may also be replaced with the following sub-operations.

At 52041, a downlink frequency-domain resource corresponding to each time-domain unit is determined based on each time-domain unit for the downlink transmission.

In some embodiments, a time-domain unit for the downlink transmission includes at least one of a time-domain unit containing a downlink sub-band or a downlink time-domain unit. Taking one time-domain unit as a unit, a downlink frequency-domain resource corresponding to each time-domain unit is determined based on each time-domain unit for the downlink transmission.

In some embodiments, when there are two types of time-domain unit (a first time-domain unit and a second time-domain unit) for the downlink transmission, a downlink frequency-domain resource corresponding to each time-domain unit in the first time-domain unit is determined based on the first time-domain unit, and a downlink frequency-domain resource corresponding to each time-domain unit in the second time-domain unit is determined based on the second time-domain unit. Exemplarily, the time-domain unit for the downlink transmission includes both a time-domain unit containing a downlink sub-band and a downlink time-domain unit, that is, some time-domain units for the downlink transmission are the time-domain unit containing the downlink sub-band, and the other time-domain units for the downlink transmission are the downlink time-domain unit. When a time-domain unit is a time-domain unit containing a downlink sub-band, a downlink frequency-domain resource corresponding to the time-domain unit is determined based on the time-domain unit being the time-domain unit containing the downlink sub-band. When a time-domain unit is a downlink time-domain unit, a downlink frequency-domain resource corresponding to the time-domain unit is determined based on the time-domain unit being the downlink time-domain unit.

Exemplarily, as illustrated in FIG. 33, a slot includes symbol 0 to symbol 13, where symbol 0 to symbol 7 each are a time-domain unit containing a downlink sub-band, and symbol 8 to symbol 13 each are a downlink time-domain unit, and transmission resources allocated for a PDSCH are symbol 6 to symbol 9. Taking one symbol as a unit, based on a time-domain unit for downlink transmission in symbol 6 being the time-domain unit containing the downlink sub-band, it is determined that a downlink frequency-domain resource in symbol 6 is a frequency-domain resource containing the downlink sub-band on symbol 6. Based on a time-domain unit for downlink transmission in symbol 7 being the time-domain unit containing the downlink sub-band, it is determined that a downlink frequency-domain resource in symbol 7 is a frequency-domain resource containing the downlink sub-band on symbol 7. Based on a time-domain unit for downlink transmission in symbol 8 being the downlink time-domain unit, it is determined that a downlink frequency-domain resource in symbol 8 is each frequency-domain resource on symbol 8. Based on a time-domain unit for downlink transmission in symbol 9 being the downlink time-domain unit, it is determined that a downlink frequency-domain resource in symbol 9 is each frequency-domain resource on symbol 9.

At 52042, a frequency-domain resource for the downlink transmission is determined based on an intersection between a downlink frequency-domain resource corresponding to each time-domain unit allocated and a frequency-domain resource allocated for the downlink transmission.

In some embodiments, the frequency-domain resource for the downlink transmission is determined based on the intersection between the downlink frequency-domain resource corresponding to each time-domain unit allocated and the frequency-domain resource allocated for the downlink transmission. The frequency-domain resource for the downlink transmission is in a range of the downlink frequency-domain resource corresponding to each time-domain unit and the frequency-domain resource allocated for the downlink transmission. The terminal does not expect that the frequency-domain resource for the downlink transmission is outside the downlink frequency-domain resource corresponding to each time-domain unit and the frequency-domain resource allocated for the downlink transmission.

In some embodiments, a time-domain unit for the downlink transmission includes at least one of a time-domain unit containing a downlink sub-band or a downlink time-domain unit. Taking one time-domain unit as a unit, the frequency-domain resource for the downlink transmission is determined based on the intersection between the downlink frequency-domain resources corresponding to each time-domain unit and the frequency-domain resource allocated for the downlink transmission.

In some embodiments, when there are two types of time-domain unit (a first time-domain unit and a second time-domain unit) for the downlink transmission, a frequency-domain resource for the downlink transmission in the first time-domain unit is determined based on an intersection between a downlink frequency-domain resource corresponding to the first time-domain unit and a frequency-domain resource allocated for the downlink transmission, and a frequency-domain resource for the downlink transmission in the first time-domain unit is determined based on an intersection between a downlink frequency-domain resource corresponding to the first time-domain unit and a frequency-domain resource allocated for the downlink transmission. Exemplarily, the time-domain unit for the downlink transmission includes a time-domain unit containing a downlink sub-band and a downlink time-domain unit, that is, some time-domain units for the downlink transmission are the time-domain unit containing the downlink sub-band, and the other time-domain units for the downlink transmission are the downlink time-domain unit. When a time-domain unit is a time-domain unit containing a downlink sub-band, a frequency-domain resource for the downlink transmission in the time-domain unit is determined based on an intersection between a downlink frequency-domain resource corresponding to the time-domain unit containing the downlink sub-band and a frequency-domain resource allocated for the downlink transmission. When a time-domain unit is a downlink time-domain unit, a frequency-domain resource for the downlink transmission in the time-domain unit is determined based on an intersection between a downlink frequency-domain resource corresponding to the downlink time-domain unit and a frequency-domain resource allocated for the downlink transmission.

Exemplarily, as illustrated in FIG. 35, a slot includes symbol 0 to symbol 13, where symbol 0 to symbol 7 each are a time-domain unit containing a downlink sub-band, and symbol 8 to symbol 13 each are a downlink time-domain unit. Transmission resources allocated for a PDSCH are symbol 6 to symbol 9, that is, there are two types of time-domain unit allocated for the PDSCH. Symbol 6 is the time-domain unit containing the downlink sub-band, downlink frequency-domain resources corresponding to the time-domain unit containing the downlink sub-band are RB20 to RB40, and frequency-domain resources allocated for the downlink transmission are RB20 to RB60. Based on an intersection between the downlink frequency-domain resources corresponding to the time-domain unit containing the downlink sub-band and the frequency-domain resources allocated for the downlink transmission, it is determined that frequency-domain resources for the downlink transmission in symbol 6 are RB20 to RB40. Symbol 7 is the time-domain unit containing the downlink sub-band, downlink frequency-domain resources corresponding to the time-domain unit containing the downlink sub-band are RB20 to RB40, and frequency-domain resources allocated for the downlink transmission are RB20 to RB60. Based on an intersection between the downlink frequency-domain resources corresponding to the time-domain unit containing the downlink sub-band and the frequency-domain resources allocated for the downlink transmission, it is determined that frequency-domain resources for the downlink transmission in symbol 7 are RB20 to RB40. Symbol 8 is the downlink time-domain unit, downlink frequency-domain resources corresponding to the downlink time-domain unit are RB0 to RB80, and frequency-domain resources allocated for the downlink transmission are RB20 to RB60. Based on an intersection between the downlink frequency-domain resources corresponding to the downlink time-domain unit and the frequency-domain resources allocated for the downlink transmission, it is determined that frequency-domain resources for the downlink transmission in symbol 8 are RB20 to RB60. Symbol 9 is the downlink time-domain unit, downlink frequency-domain resources corresponding to the downlink time-domain unit are RB0 to RB80, and frequency-domain resources allocated for the downlink transmission are RB20 to RB60. Based on an intersection between the downlink frequency-domain resources corresponding to the downlink time-domain unit and the frequency-domain resources allocated for the downlink transmission, it is determined that frequency-domain resources for the downlink transmission in symbol 9 are RB20 to RB60.

As above mentioned, in embodiments of the disclosure, a frequency-domain resource corresponding to each time-domain unit is determined based on each time-domain unit for the downlink transmission. As such, for each time-domain unit, data transmission can be performed according to the determined frequency-domain resource during the downlink transmission, thereby avoiding an error in the data transmission caused by multiple types of time-domain unit in the allocated transmission resource.

It may be noted that, methods for determining the above time-domain resource and frequency-domain resource for the downlink transmission can be combined according to the understanding of those skilled in the art, to form a new embodiment for implementation.

FIG. 38 is a flowchart of a method for determining a transmission parameter provided in an exemplary embodiment of the disclosure. The method is performed by a terminal device or a network device, and includes the following.

At 620, a transmission parameter for a first transmission is determined based on one or two types of time-domain unit configured for the first transmission.

The first transmission refers to data transmission between the network device and the terminal device, including an uplink transmission and/or a downlink transmission. The uplink transmission refers to data transmission from the terminal device to the network device, and the downlink transmission refers to data transmission from the network device to the terminal device. A transmission resource allocated for the first transmission refers to a resource allocated for the uplink transmission and used for uplink data transmission, or refers to a resource allocated for the downlink transmission and used for downlink data transmission.

The time-domain unit refers to a transmission unit in a time-domain direction, which includes at least one of a sub-frame, a slot, or a symbol. In embodiments of the disclosure, for example, the time-domain unit is a symbol. The time-domain unit includes a time-domain unit only for the uplink transmission, a time-domain unit only for the downlink transmission, and a time-domain unit containing both an uplink sub-band and a downlink sub-band. In some embodiments, the time-domain unit is semi-statically configured or dynamically indicated.

The transmission parameter includes at least one of a time-domain resource, a frequency-domain resource, or a power parameter. In some embodiments, a time-domain resource for the first transmission is determined based on a time-domain unit in the transmission resource allocated for the first transmission. In some embodiments, a frequency-domain resource for the first transmission is determined based on the time-domain unit in the transmission resource allocated for the first transmission. In some embodiments, a power parameter for the first transmission is determined based on the time-domain unit in the transmission resource allocated for the first transmission. When the first transmission is an uplink transmission, the power parameter is a parameter for determining an uplink transmit power.

In the case where the network device allocates a transmission resource for the first transmission, the transmission parameter for the first transmission is determined according to one or two types of time-domain unit in the transmission resource. The transmission parameter for the first transmission is determined based on the time-domain unit in the transmission resource allocated for the first transmission.

As above mentioned, in embodiments of the disclosure, when one or more types of time-domain unit exist, the transmission parameter for the first transmission can be determined based on the time-domain unit in the transmission resource allocated for the first transmission. As such, during data transmission, different transmission parameters can be used according to different time-domain units, thereby avoiding failure of the data transmission due to the use of the same transmission parameter for different time-domain units.

In some embodiments, the first transmission includes an uplink transmission.

A transmission parameter for the uplink transmission is determined based on a time-domain unit configured for the first transmission. The time-domain unit includes at least one of a time-domain unit containing an uplink sub-band or an uplink time-domain unit.

In some embodiments, the time-domain unit is configured as a first type of time-domain unit, and a time-domain resource for the uplink transmission includes the first type of time-domain unit.

In some embodiments, the time-domain unit is configured as a first type of time-domain unit and a second type of time-domain unit, and a time-domain resource for the uplink transmission includes the first type of time-domain unit.

In some embodiments, the time-domain unit is configured as a first type of time-domain unit and a second type of time-domain unit, and a time-domain resource for the uplink transmission includes the first type of time-domain unit and the second type of time-domain unit.

In some embodiments, the time-domain unit is configured with a first type of time-domain unit, and a frequency-domain resource for the uplink transmission is determined based on the first type of time-domain unit.

In some embodiments, a frequency-domain resource for the uplink transmission is determined based on an intersection between an uplink frequency-domain resource corresponding to the first type of time-domain unit and a frequency-domain resource allocated for the uplink transmission.

In some embodiments, the time-domain unit is configured with a first type of time-domain unit, and a power parameter for the uplink transmission is determined based on the first type of time-domain unit.

In some embodiments, the power parameter for the uplink transmission includes at least one of: a power parameter configured for the first type of time-domain unit; or the number of frequency-domain resources corresponding to the first type of time-domain unit.

In some embodiments, a frequency-domain resource for the uplink transmission is determined based on each time-domain unit.

In some embodiments, a frequency-domain resource for the uplink transmission is determined based on an intersection between an uplink frequency-domain resource corresponding to each time-domain unit and a frequency-domain resource allocated for the uplink transmission.

In some embodiments, a power parameter for the uplink transmission is determined based on each time-domain unit.

In some embodiments, the power parameter for the uplink transmission includes at least one of: a power parameter configured for each time-domain unit; or the number of frequency-domain resources corresponding to each time-domain unit.

In some embodiments, the uplink transmission includes at least one of: a PUCCH transmission, a PUSCH transmission, a PUCCH repetition, a PUSCH repetition, or an SRS.

For specific implementations, reference can be made to the transmission method in which the first transmission is an uplink transmission in the above method embodiments.

As above mentioned, in embodiments of the disclosure, when a transmission resource allocated for the uplink transmission may include multiple types of time-domain unit, the transmission parameter for the uplink transmission is determined based on the time-domain unit allocated for the uplink transmission as follows. A corresponding time-domain resource and/or frequency-domain resource and/or power parameter is determined according to the determined time-domain unit, thereby avoiding an error in data transmission caused by different time-domain units.

In some embodiments, the first transmission includes a downlink transmission.

A transmission parameter for the downlink transmission is determined based on a time-domain unit configured for the first transmission. The time-domain unit includes at least one of a time-domain unit containing a downlink sub-band or a downlink time-domain unit.

In some embodiments, the time-domain unit is configured as a first type of time-domain unit, and a time-domain resource for the downlink transmission includes the first type of time-domain unit.

In some embodiments, the time-domain unit is configured as a first type of time-domain unit and a second type of time-domain unit, and a time-domain resource for the downlink transmission includes the first type of time-domain unit.

In some embodiments, the time-domain unit is configured as a first type of time-domain unit and a second type of time-domain unit, and a time-domain resource for the downlink transmission includes the first type of time-domain unit and the second type of time-domain unit.

In some embodiments, the time-domain unit is configured with a first type of time-domain unit, and a frequency-domain resource for the downlink transmission is determined based on the first type of time-domain unit.

In some embodiments, a frequency-domain resource for the downlink transmission is determined based on an intersection between a downlink frequency-domain resource corresponding to the first type of time-domain unit and a frequency-domain resource allocated for the downlink transmission.

In some embodiments, a frequency-domain resource for the downlink transmission is determined based on a type of each time-domain unit.

In some embodiments, a frequency-domain resource for the downlink transmission is determined based on an intersection between a downlink frequency-domain resource corresponding to each time-domain unit and a frequency-domain resource allocated for the downlink transmission.

In some embodiments, the downlink transmission includes at least one of: a PDCCH transmission, a PDSCH transmission, a PDCCH repetition, a PDSCH repetition, or a CSI-RS.

For specific implementations, reference can be made to the transmission method in which the first transmission is a downlink transmission in the above method embodiments.

As above mentioned, in embodiments of the disclosure, when a transmission resource allocated for the downlink transmission may include multiple types of time-domain unit, the transmission parameter for the downlink transmission is determined based on the time-domain unit allocated for the downlink transmission as follows. A corresponding time-domain resource and/or frequency-domain resource and/or power parameter is determined according to the determined time-domain unit, thereby avoiding an error in data transmission caused by different time-domain units.

In some embodiments, the transmission method provided in embodiments of the disclosure is performed by the terminal device.

In some embodiments, the terminal device receives first information. The first information is configuration information transmitted by the network device, such as SBFD configuration information. The first information is used for determining whether a time-domain unit in the transmission resource allocated for the uplink transmission includes a time-domain unit containing an uplink sub-band or a time-domain unit containing a downlink sub-band. If the time-domain unit in the transmission resource allocated for the uplink transmission includes the time-domain unit containing the uplink sub-band, then for the uplink transmission in the time-domain unit containing the uplink sub-band, data transmission needs to be performed on the uplink sub-band. If the time-domain unit in the transmission resource allocated for the uplink transmission includes the uplink time-domain unit, then for the uplink transmission, data transmission is directly performed in the uplink time-domain unit. If a time-domain unit in the transmission resource allocated for the downlink transmission includes a time-domain unit containing a downlink sub-band, then for the downlink transmission in the time-domain unit containing the downlink sub-band, data transmission needs to be performed on the downlink sub-band. If the time-domain unit in the transmission resource allocated for the downlink transmission includes a downlink time-domain unit, then for the downlink transmission, data transmission is directly performed in the downlink time-domain unit.

In some embodiments, the terminal device receives second information, where the second information is used for determining a transmission resource (including at least one of a time-domain resource or a frequency-domain resource) allocated for the first transmission. The second information can be used for determining a time-domain unit allocated for the first transmission, including a time-domain unit allocated for the uplink transmission or a time-domain unit allocated for the downlink transmission. The second information is at least one of DCI, semi-static/semi-persistent scheduling (SPS), or configured grant (CG). In embodiments of the disclosure, for example, the second information is DCI. The DCI carries at least one of a time-domain resource, a frequency-domain resource, or a power parameter allocated for the uplink/downlink transmission.

In some embodiments, the transmission method provided in embodiments of the disclosure is performed by the network device.

In some embodiments, the network device transmits first information. The first information is configuration information transmitted by the network device to the terminal device, such as SBFD configuration information. The first information is used for determining whether a time-domain unit in the transmission resource allocated for the uplink transmission includes a time-domain unit containing an uplink sub-band or a time-domain unit containing a downlink sub-band. If the time-domain unit in the transmission resource allocated for the uplink transmission includes the time-domain unit containing the uplink sub-band, then for the uplink transmission in the time-domain unit containing the uplink sub-band, data transmission needs to be performed on the uplink sub-band. If the time-domain unit in the transmission resource allocated for the uplink transmission includes the uplink time-domain unit, then for the uplink transmission, data transmission is directly performed in the uplink time-domain unit. If a time-domain unit in the transmission resource allocated for the downlink transmission includes a time-domain unit containing a downlink sub-band, then for the downlink transmission in the time-domain unit containing the downlink sub-band, data transmission needs to be performed on the downlink sub-band. If the time-domain unit in the transmission resource allocated for the downlink transmission includes a downlink time-domain unit, then for the downlink transmission, data transmission is directly performed in the downlink time-domain unit.

In some embodiments, the network device transmits second information, where the second information is used for determining a transmission resource (including at least one of a time-domain resource or a frequency-domain resource) allocated for the first transmission. The second information can be used for determining a time-domain unit allocated for the first transmission, including a time-domain unit allocated for the uplink transmission or a time-domain unit allocated for the downlink transmission. The second information is at least one of DCI, SPS, or CG. In embodiments of the disclosure, for example, the second information is DCI. The DCI carries at least one of a time-domain resource, a frequency-domain resource, or a power parameter allocated for the uplink/downlink transmission.

In some embodiments, the time-domain unit allocated for the first transmission is configured as a first time-domain unit by default, where the first time-domain unit is allowed by the network device to be scheduled or configured, or the first time-domain unit is expected by the terminal device to be scheduled or configured. In the case where part of time-domain units allocated as the first time-domain unit is changed to a second time-domain unit, the first transmission is discarded, or a time-domain unit in the second time-domain unit is not used.

In some embodiments, the time-domain unit allocated for the first transmission is configured as a first time-domain unit by default, where the first time-domain unit is allowed by the network device to be scheduled or configured, or the first time-domain unit is expected by the terminal device to be scheduled or configured. In this case, the transmission parameter for the first transmission is determined based on the configured time-domain unit being the first time-domain unit. In the case where a time-domain unit allocated as the first time-domain unit is changed to a second time-domain unit, the transmission parameter for the first transmission is determined based on two types of time-domain unit being configured.

In some embodiments, the terminal device receives a first configuration, where the first configuration is used for configuring a transmission resource for the first transmission, and a time-domain unit in the transmission resource is allocated as a first time-domain unit. The terminal device receives a second configuration, where the second configuration is used for changing the first time-domain unit in the transmission resource from the first time-domain unit to a second time-domain unit, and the first time-domain unit is part of time-domain units in the transmission resource. The terminal device discards the first transmission or performs the first transmission not using the first time-domain unit, or re-determines a transmission parameter for the first transmission based on two types of time-domain unit being configured (for example, examples in FIG. 15 to FIG. 37).

In some embodiments, the network device transmits a first configuration, where the first configuration is used for configuring a transmission resource for the first transmission, and a time-domain unit in the transmission resource is allocated as a first time-domain unit. The network device transmits a second configuration, where the second configuration is used for changing the first time-domain unit in the transmission resource from the first time-domain unit to a second time-domain unit, and the first time-domain unit is part of time-domain units in the transmission resource. The terminal device discards the first transmission or performs the first transmission not using the first time-domain unit, or re-determines a transmission parameter for the first transmission based on two types of time-domain unit being configured (for example, examples in FIG. 15 to FIG. 37).

It may be noted that, the above transmission method is applicable to a mobile communication system in which there are two types of time-domain unit in a transmission direction of the first transmission. The above transmission method is applicable to a mobile communication system in which there are two types of time-domain unit in an uplink direction and/or a mobile communication system in which there are two types of time-domain unit in a downlink direction.

In some embodiments, the terminal device receives one or more configuration information. The terminal device determines based on the one or more configuration information that there are two types of time-domain unit in a transmission direction of the first transmission, or determines based on the one or more configuration information that there are two types of time-domain unit or two types of time-domain unit are allowed to be configured in an uplink direction, or determines based on the one or more configuration information that there are two types of time-domain unit or two types of time-domain unit are allowed to be configured in a downlink direction.

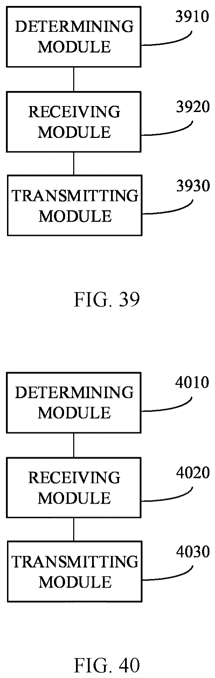

FIG. 39 is a block diagram of a transmission apparatus provided in another exemplary embodiment of the disclosure. The apparatus includes a determining module 3910. The determining module 3910 is configured to determine a time-domain unit configured for a first transmission. The time-domain unit configured for the first transmission contains one type of time-domain unit.

In some embodiments, only the one type of time-domain unit is allocated to the time-domain unit configured for the first transmission. Alternatively, only the one type of time-domain unit is allocated by a network device to the time-domain unit configured for the first transmission. Alternatively, a terminal device does not expect that at least two types of time-domain unit are allocated by the network device to the time-domain unit configured for the first transmission. Alternatively, the terminal device expects that only the one type of time-domain unit is allocated by the network device to the time-domain unit configured for the first transmission. Alternatively, the terminal device discards the first transmission for which the at least two types of time-domain unit are allocated.

In some embodiments, the first transmission is an uplink transmission, and the one type of time-domain unit is one of an uplink time-domain unit and a time-domain unit containing an uplink sub-band.

In some embodiments, the first transmission is a downlink transmission, and the one type of time-domain unit is one of a downlink time-domain unit and a time-domain unit containing a downlink sub-band.

The determining module 3910 is further configured to determine a transmission parameter for the first transmission. The transmission parameter is determined based on the one type of time-domain unit. The transmission parameter includes at least one of a time-domain resource, a frequency-domain resource, or a power parameter.

In some embodiments, a time-domain resource for the first transmission includes the one type of time-domain unit.

In some embodiments, a frequency-domain resource for the first transmission is determined based on a frequency-domain resource corresponding to the one type of time-domain unit and having a first transmission direction, and the first transmission direction is a transmission direction of the first transmission.

In some embodiments, the first transmission is an uplink transmission, and a frequency-domain resource for the uplink transmission is in a range of an uplink frequency-domain resource corresponding to the one type of time-domain unit and a frequency-domain resource allocated for the uplink transmission. Alternatively, in some embodiments, the first transmission is a downlink transmission, and a frequency-domain resource for the downlink transmission is in a range of a downlink frequency-domain resource corresponding to the one type of time-domain unit and a frequency-domain resource allocated for the downlink transmission.

In some embodiments, the first transmission is an uplink transmission, and a power parameter for the uplink transmission is determined based on the one type of time-domain unit.

In some embodiments, the power parameter for the uplink transmission includes at least one of: a power parameter configured for the one type of time-domain unit; or the number of frequency-domain resources corresponding to the one type of time-domain unit.

In some embodiments, for the first transmission configured by an upper layer, a terminal device performs the transmission only in the one type of time-domain unit allocated. Alternatively, the terminal device discards the first transmission for which two types of time-domain unit are allocated

In some embodiments, for the first transmission indicated by physical-layer signaling, the terminal device does not expect that at least two types of time-domain unit are allocated by a network device to the time-domain unit configured for the first transmission. Alternatively, the terminal device expects that only the one type of time-domain unit is allocated by the network device to the time-domain unit configured for the first transmission. Alternatively, only the one type of time-domain unit is allocated by the network device to the time-domain unit configured for the first transmission.

In some embodiments, the first transmission is at least one of an RACH, an SSB, or CORESET 0.

In some embodiments, before an uplink sub-band configuration or a downlink sub-band configuration or an SBFD configuration is received, the time-domain unit configured for the first transmission is determined.

In some embodiments, the first transmission is discarded, or the first transmission is performed not using the transmission resource.

The above apparatus further includes a receiving module 3920 and a transmitting module 3930.

For the number of frequency-domain resources corresponding to the time-domain unit and the number of frequency-domain resources corresponding to the time-domain unit, the receiving module 3920 is configured to receive a first configuration. The first configuration is used for configuring a transmission resource for the first transmission, and a time-domain unit in the transmission resource is allocated as a first time-domain unit.

The receiving module 3920 is further configured to receive a second configuration. The second configuration is used for changing the first time-domain unit in the transmission resource to a second time-domain unit.

The transmitting module 3930 is configured to transmit a first configuration. The first configuration is used for configuring a transmission resource for the first transmission, and a time-domain unit in the transmission resource is allocated as a first time-domain unit.

The transmitting module 3930 is further configured to transmit a second configuration. The second configuration is used for changing the first time-domain unit in the transmission resource to a second time-domain unit.

In some embodiments, the above apparatus can be implemented as part of the terminal device. In this case, the receiving module 3920 is configured to receive a first configuration and a second configuration from the network device, and the transmitting module 3930 is configured to transmit the first configuration and the second configuration to the network device.

In some embodiments, the above apparatus can be implemented as part of the network device. In this case, the receiving module 3920 is configured to receive a first configuration and a second configuration from the terminal device, and the transmitting module 3930 is configured to transmit the first configuration and the second configuration to the terminal device.

It may be noted that, the above determining module 3910 can be implemented by a processor, or can be implemented through executing a corresponding program by the processor. The above receiving module 3920 can be implemented by a receiver, or can be implemented through controlling the receiver by the processor, or can be implemented through executing a corresponding program by the receiver. The above transmitting module 3930 can be implemented by a transmitter, or can be implemented through controlling the transmitter by the processor, or can be implemented through executing a corresponding program by the transmitter. The above processor, receiver, and transmitter can also be implemented as a chip.

FIG. 40 is a block diagram of a transmission apparatus provided in another exemplary embodiment of the disclosure. The apparatus includes a determining module 4010. The determining module 4010 is configured to determine a time-domain unit configured for a first transmission. The time-domain unit includes a first time-domain unit and a second time-domain unit.

In some embodiments, the first transmission is an uplink transmission.

The first time-domain unit is a time-domain unit containing an uplink sub-band, and the second time-domain unit is an uplink time-domain unit. Alternatively, the first time-domain unit is the uplink time-domain unit, and the second time-domain unit is the time-domain unit containing the uplink sub-band.

The determining module 4010 is further configured to determine a transmission parameter for the uplink transmission. The transmission parameter is determined based on the first time-domain unit. The transmission parameter includes at least one of a time-domain resource, a frequency-domain resource, or a power parameter.

In some embodiments, a time-domain resource for the uplink transmission includes the first time-domain unit.

The determining module 4010 is further configured to determine a transmission parameter for the uplink transmission. The transmission parameter is determined based on the first time-domain unit and the second time-domain unit. The transmission parameter includes at least one of a time-domain resource, a frequency-domain resource, or a power parameter.

In some embodiments, a time-domain resource for the uplink transmission includes the first time-domain unit and the second time-domain unit.

In some embodiments, a frequency-domain resource for the uplink transmission is determined based on the first time-domain unit.

In some embodiments, the frequency-domain resource for the uplink transmission is in a range of an uplink frequency-domain resource corresponding to the first time-domain unit and a frequency-domain resource allocated for the uplink transmission.

In some embodiments, a power parameter for the uplink transmission is determined based on the first time-domain unit.

In some embodiments, the power parameter for the uplink transmission includes at least one of: a power parameter configured for the first time-domain unit; or the number of frequency-domain resources corresponding to the first time-domain unit.

In some embodiments, a frequency-domain resource for the uplink transmission is determined based on each of time-domain units allocated for the uplink transmission.

In some embodiments, the frequency-domain resource for the uplink transmission is in a range of an uplink frequency-domain resource corresponding to each of the time-domain units and a frequency-domain resource allocated for the uplink transmission.

In some embodiments, a power parameter for the uplink transmission is determined based on each time-domain unit allocated for the uplink transmission in the first time-domain unit and the second time-domain unit

In some embodiments, the power parameter for the uplink transmission includes at least one of: a power parameter configured for each time-domain unit; or the number of frequency-domain resources corresponding to each time-domain unit.

In some embodiments, the uplink transmission includes at least one of: a PUCCH transmission; a PUSCH transmission; a PUCCH repetition; a PUSCH repetition; or an SRS.

In some embodiments, the first transmission is a downlink transmission.

The first time-domain unit is a time-domain unit containing a downlink sub-band, and the second time-domain unit is a downlink time-domain unit. Alternatively, the first time-domain unit is the downlink time-domain unit, and the second time-domain unit is the time-domain unit containing the downlink sub-band.

The determining module 4010 is further configured to determine a transmission parameter for the downlink transmission. The transmission parameter is determined based on the first time-domain unit. The transmission parameter includes at least one of a time-domain resource, a frequency-domain resource, or a power parameter.

In some embodiments, a time-domain resource for the downlink transmission includes the first time-domain unit.

The determining module 4010 is further configured to determine a transmission parameter for the downlink transmission. The transmission parameter is determined based on the first time-domain unit and the second time-domain unit. The transmission parameter includes at least one of a time-domain resource, a frequency-domain resource, or a power parameter.

In some embodiments, a time-domain resource for the downlink transmission includes the first time-domain unit and the second time-domain unit.

In some embodiments, a frequency-domain resource for the downlink transmission is determined based on the first time-domain unit.

In some embodiments, the frequency-domain resource for the downlink transmission is in a range of a downlink frequency-domain resource corresponding to the first time-domain unit and a frequency-domain resource allocated for the downlink transmission.

In some embodiments, a frequency-domain resource for the downlink transmission is determined based on each of time-domain units allocated for the downlink transmission.

In some embodiments, the frequency-domain resource for the downlink transmission is in a range of a downlink frequency-domain resource corresponding to each of the time-domain units and a frequency-domain resource allocated for the downlink transmission.

In some embodiments, the downlink transmission includes at least one of: a PDCCH transmission; a PDSCH transmission; a PDCCH repetition; a PDSCH repetition; or a CSI-RS.

The apparatus further includes a receiving module 4020.

The receiving module 4020 is configured to receive a first configuration. The first configuration is used for configuring a transmission resource for the first transmission, and a time-domain unit in the transmission resource is allocated as a first time-domain unit.

The receiving module 4020 is further configured to receive a second configuration. The second configuration is used for changing the first time-domain unit in the transmission resource to a second time-domain unit.

In some embodiments, the first transmission is discarded, or the first transmission is performed not using the first time-domain unit.

The transmitting module 4030 is configured to transmit a first configuration. The first configuration is used for configuring a transmission resource for the first transmission, and a time-domain unit in the transmission resource is allocated as a first time-domain unit.

The transmitting module 4030 is further configured to transmit a second configuration. The second configuration is used for changing the first time-domain unit in the transmission resource to a second time-domain unit.

In some embodiments, the above apparatus can be implemented as part of the terminal device. In this case, the receiving module 4020 is configured to receive a first configuration and a second configuration from the network device, and the transmitting module 4030 is configured to transmit the first configuration and the second configuration to the network device.

In some embodiments, the above apparatus can be implemented as part of the network device. In this case, the receiving module 4020 is configured to receive a first configuration and a second configuration from the terminal device, and the transmitting module 4030 is configured to transmit the first configuration and the second configuration to the terminal device.

It may be noted that, the above determining module 4010 can be implemented by a processor, or can be implemented through executing a corresponding program by the processor. The above receiving module 4020 can be implemented by a receiver, or can be implemented through controlling the receiver by the processor, or can be implemented through executing a corresponding program by the receiver. The above transmitting module 4030 can be implemented by a transmitter, or can be implemented through controlling the transmitter by the processor, or can be implemented through executing a corresponding program by the transmitter. The above processor, receiver, and transmitter can also be implemented as a chip.

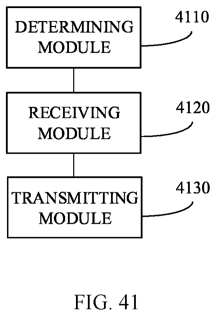

FIG. 41 is a block diagram of a transmission apparatus provided in another exemplary embodiment of the disclosure. The apparatus includes a determining module 4110. The determining module 4110 is configured to determine a transmission parameter for a first transmission based on a time-domain unit. The time-domain unit is a time-domain unit in a transmission resource allocated for the first transmission, and the transmission parameter includes at least one of a time-domain resource, a frequency-domain resource, or a power parameter.

In some embodiments, the first transmission includes an uplink transmission.

The determining module 4110 is further configured to determine a transmission parameter for the uplink transmission based on a time-domain unit. The time-domain unit includes at least one of a time-domain unit containing an uplink sub-band or an uplink time-domain unit.

In some embodiments, the time-domain unit is configured as a first type of time-domain unit, and a time-domain resource for the uplink transmission includes the first type of time-domain unit.

In some embodiments, the time-domain unit is configured as a first type of time-domain unit and a second type of time-domain unit, and a time-domain resource for the uplink transmission includes the first type of time-domain unit.

In some embodiments, the time-domain unit is configured as a first type of time-domain unit and a second type of time-domain unit, and a time-domain resource for the uplink transmission includes the first type of time-domain unit and the second type of time-domain unit.

In some embodiments, the time-domain unit is configured with a first type of time-domain unit, and a frequency-domain resource for the uplink transmission is determined based on the first type of time-domain unit.

In some embodiments, a frequency-domain resource for the uplink transmission is determined based on an intersection between an uplink frequency-domain resource corresponding to the first type of time-domain unit and a frequency-domain resource allocated for the uplink transmission.

In some embodiments, the time-domain unit is configured with a first type of time-domain unit, and a power parameter for the uplink transmission is determined based on the first type of time-domain unit.

In some embodiments, the power parameter for the uplink transmission includes at least one of: a power parameter configured for the first type of time-domain unit; or the number of frequency-domain resources corresponding to the first type of time-domain unit.

In some embodiments, a frequency-domain resource for the uplink transmission is determined based on each time-domain unit.

In some embodiments, a frequency-domain resource for the uplink transmission is determined based on an intersection between an uplink frequency-domain resource corresponding to each time-domain unit and a frequency-domain resource allocated for the uplink transmission.

In some embodiments, a power parameter for the uplink transmission is determined based on each time-domain unit.

In some embodiments, the power parameter for the uplink transmission includes at least one of: a power parameter configured for each time-domain unit; or the number of frequency-domain resources corresponding to each time-domain unit.

In some embodiments, the uplink transmission includes at least one of: a PUCCH transmission, a PUSCH transmission, a PUCCH repetition, a PUSCH repetition, or an SRS.

In some embodiments, the first transmission includes a downlink transmission.

The determining module 4110 is further configured to determine a transmission parameter for the downlink transmission based on a time-domain unit. The time-domain unit includes at least one of a time-domain unit containing a downlink sub-band or a downlink time-domain unit.

In some embodiments, the time-domain unit is configured as a first type of time-domain unit, and a time-domain resource for the downlink transmission includes the first type of time-domain unit.

In some embodiments, the time-domain unit is configured as a first type of time-domain unit and a second type of time-domain unit, and a time-domain resource for the downlink transmission includes the first type of time-domain unit.

In some embodiments, the time-domain unit is configured as a first type of time-domain unit and a second type of time-domain unit, and a time-domain resource for the downlink transmission includes the first type of time-domain unit and the second type of time-domain unit.

In some embodiments, the time-domain unit is configured with a first type of time-domain unit, and a frequency-domain resource for the downlink transmission is determined based on the first type of time-domain unit.

In some embodiments, a frequency-domain resource for the downlink transmission is determined based on an intersection between a downlink frequency-domain resource corresponding to the first type of time-domain unit and a frequency-domain resource allocated for the downlink transmission.

In some embodiments, a frequency-domain resource for the downlink transmission is determined based on a type of each time-domain unit.

In some embodiments, a frequency-domain resource for the downlink transmission is determined based on an intersection between a downlink frequency-domain resource corresponding to each time-domain unit and a frequency-domain resource allocated for the downlink transmission.

In some embodiments, the downlink transmission includes at least one of: a PDCCH transmission, a PDSCH transmission, a PDCCH repetition, a PDSCH repetition, or a CSI-RS.

The receiving module 4120 is configured to receive a first configuration. The first configuration is used for configuring a transmission resource for the first transmission, and a time-domain unit in the transmission resource is allocated as a first type of time-domain unit.

The receiving module 4120 is further configured to receive a second configuration. The second configuration is used for changing the first type of time-domain unit in the transmission resource to a second type of time-domain unit.

In some embodiments, the first transmission is discarded, or the first transmission is performed not using the first type of time-domain unit.

The transmitting module 4130 is configured to transmit a first configuration. The first configuration is used for configuring a transmission resource for the first transmission, and a time-domain unit in the transmission resource is allocated as a first type of time-domain unit.

The transmitting module 4130 is further configured to transmit a second configuration. The second configuration is used for changing the first type of time-domain unit in the transmission resource to a second type of time-domain unit.

In some embodiments, the above apparatus can be implemented as part of the terminal device. In this case, the receiving module 4120 is configured to receive a first configuration and a second configuration from the network device, and the transmitting module 4130 is configured to transmit the first configuration and the second configuration to the network device.

In some embodiments, the above apparatus can be implemented as part of the network device. In this case, the receiving module 4120 is configured to receive a first configuration and a second configuration from the terminal device, and the transmitting module 4130 is configured to transmit the first configuration and the second configuration to the terminal device.

It may be noted that, the above determining module 4110 can be implemented by a processor, or can be implemented through executing a corresponding program by the processor. The above receiving module 4120 can be implemented by a receiver, or can be implemented through controlling the receiver by the processor, or can be implemented through executing a corresponding program by the receiver. The above transmitting module 4130 can be implemented by a transmitter, or can be implemented through controlling the transmitter by the processor, or can be implemented through executing a corresponding program by the transmitter. The above processor, receiver, and transmitter can also be implemented as a chip.

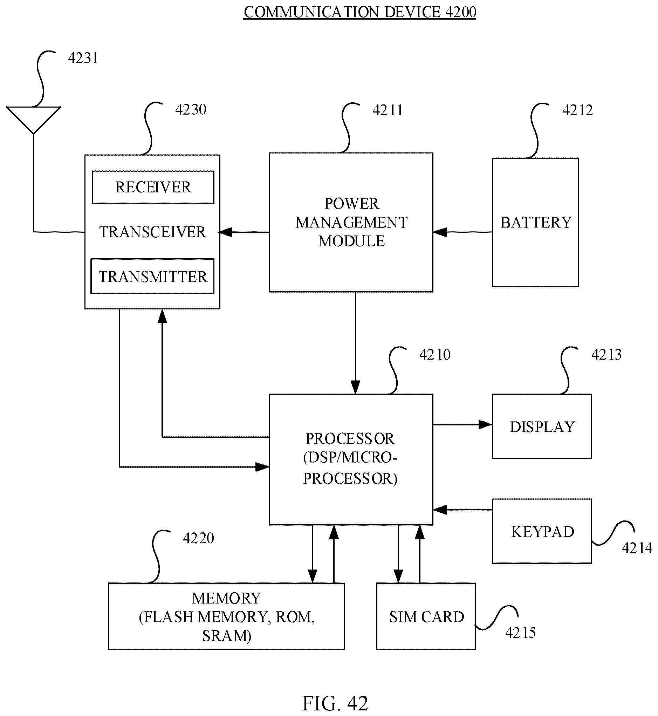

FIG. 42 is a block diagram of a communication device 4200 provided in another exemplary embodiment of the disclosure. Exemplarily, the communication device 4200 includes a processor 4210, a power management module 4211, a battery 4212, a display 4213, a keypad 4214, a subscriber identity module (SIM) card 4215, a memory 4220, a transceiver 4230, and one or more antennas 4231. Components other than the processor 4210, the memory 4220, and the transceiver 4230 are optional accessories.

The processor 4210 can be implemented to implement functions, procedures, and/or methods proposed in the disclosure. The processor 4210 can be configured to control one or more other components of the communication device 4200 to implement the functions, procedures, and/or methods proposed in the disclosure. Layers of the radio interface protocol can be implemented in the processor 4210. The processor 4210 may include an application specific integrated circuit (ASIC), other chipsets, logic circuits, and/or data processing devices. The processor 4210 may be an application processor (AP). The processor 4210 may include at least one of a digital signal processor (DSP), a central processing unit (CPU), a graphic processing unit (GPU), or a modem (modulator and demodulator).

The memory 4220 is operatively coupled with the processor 4210 and stores various information to operate the processor 4210. The memory 4220 may include a read-only memory (ROM), a random access memory (RAM), a flash memory, a memory card, a storage medium, and/or other storage devices. The memory 4220 can be implemented within the processor 4210 or outside the processor 4210, and in this case, can be communicatively coupled to the processor 4210 via various means as is known in the art.

The transceiver 4230 is operatively coupled with the processor 4210 and transmits and/or receives a radio signal. The transceiver 4230 includes a transmitter and a receiver. The transceiver 4230 may include a baseband circuit to process a radio frequency signal. The transceiver 4230 controls one or more antennas 4231 to transmit and/or receive the radio signal.

A chip is further provided in the disclosure. The chip includes programmable logic circuits and/or program instructions. A communication device equipped with the chip is configured to, when running, implement the transmission method provided in the above method embodiments.

A computer-readable storage medium is further provided in the disclosure. The storage medium is configured to store at least one program which is loaded and executed by a processor to cause a communication device to implement the transmission method provided in the above method embodiments.

A computer program product is further provided in the disclosure. The computer program product includes at least one program. The at least one program is stored in a computer-readable storage medium. A processor of a communication device is configured to read the at least one program from the computer-readable storage medium, and the processor is configured to execute the at least one program, to cause the communication device to perform the transmission method provided in the above method embodiments.

It may be understood that, "multiple" referred to herein refers to two or more than two. The "and/or" describes an association between associated objects, which means that there may be three relationships. For example, A and/or B may mean A alone, both A and B exist, and B alone. The character "/" generally indicates that the associated objects are in an "or" relationship.

It will be understood by those of ordinary skill in the art that, all or part of the operations in the foregoing embodiments may be accomplished by means of hardware, or a program to instruct associated hardware. The program may be stored in a computer-readable storage medium. The storage medium mentioned above may be an ROM, a magnetic disk, or an optical disk, etc.

The foregoing elaborations are merely optional embodiments of the disclosure, but are not intended to limit the disclosure. Any modification, equivalent replacement, and improvement made within the spirit and principle of the disclosure shall belong to the protection scope of the disclosure.

**Claims**

1.  A transmission method, comprising:
    determining a time-domain unit configured for a first transmission, wherein the time-domain unit configured for the first transmission contains one type of time-domain unit.

2.  The method of claim 1, wherein

    only the one type of time-domain unit is allocated to the time-domain unit configured for the first transmission; or
    only the one type of time-domain unit is allocated by a network device to the time-domain unit configured for the first transmission; or
    a terminal device does not expect that at least two types of time-domain unit are allocated by the network device to the time-domain unit configured for the first transmission; or
    the terminal device expects that only the one type of time-domain unit is allocated by the network device to the time-domain unit configured for the first transmission; or
    the terminal device discards the first transmission for which the at least two types of time-domain unit are allocated.

3.  The method of claim 2, wherein
    the first transmission is an uplink transmission, and the one type of time-domain unit is one of an uplink time-domain unit and a time-domain unit containing an uplink sub-band; or the first transmission is a downlink transmission, and the one type of time-domain unit is one of a downlink time-domain unit and a time-domain unit containing a downlink sub-band.

4.  The method of any one of claims 1 to 3, further comprising:

    determining a transmission parameter for the first transmission, wherein the transmission parameter is determined based on the one type of time-domain unit, wherein
    the transmission parameter comprises at least one of a time-domain resource, a frequency-domain resource, or a power parameter.

5.  The method of any one of claims 1 to 4, wherein a time-domain resource for the first transmission comprises the one type of time-domain unit.

6.  The method of any one of claims 1 to 4, wherein a frequency-domain resource for the first transmission is determined based on a frequency-domain resource corresponding to the one type of time-domain unit and having a first transmission direction, and the first transmission direction is a transmission direction of the first transmission.

7.  The method of any one of claims 1 to 4, wherein

    the first transmission is an uplink transmission, and a frequency-domain resource for the uplink transmission is in a range of an uplink frequency-domain resource corresponding to the one type of time-domain unit and a frequency-domain resource allocated for the uplink transmission; or
    the first transmission is a downlink transmission, and a frequency-domain resource for the downlink transmission is in a range of a downlink frequency-domain resource corresponding to the one type of time-domain unit and a frequency-domain resource allocated for the downlink transmission.

8.  The method of any one of claims 1 to 4, wherein the first transmission is an uplink transmission, and a power parameter for the uplink transmission is determined based on the one type of time-domain unit.

9.  The method of claim 8, wherein the power parameter for the uplink transmission comprises at least one of:

    a power parameter configured for the one type of time-domain unit; or
    a number of frequency-domain resources corresponding to the one type of time-domain unit.

10. The method of claim 1, wherein

    for the first transmission configured by an upper layer, a terminal device performs the first transmission only in the one type of time-domain unit allocated; or the terminal device discards the first transmission for which two types of time-domain unit are allocated; and/or

for the first transmission indicated by physical-layer signaling, the terminal device does not expect that at least two types of time-domain unit are allocated by a network device to the time-domain unit configured for the first transmission; or the terminal device expects that only the one type of time-domain unit is allocated by the network device to the time-domain unit configured for the first transmission; or only the one type of time-domain unit is allocated by the network device to the time-domain unit configured for the first transmission.

11. The method of claim 1, wherein
the first transmission is at least one of a random access channel (RACH), a synchronization signal and physical broadcast channel (PBCH) block (SSB), or control resource set (CORESET) 0.

12. The method of claim 1, wherein determining the time-domain unit configured for the first transmission comprises:
before receiving an uplink sub-band configuration or a downlink sub-band configuration or a sub-band full duplex (SBFD) configuration, determining the time-domain unit configured for the first transmission.

13. The method of any one of claims 1 to 3, further comprising:

receiving a first configuration, wherein the first configuration is used for configuring a transmission resource for the first transmission, and a time-domain unit in the transmission resource is allocated as a first time-domain unit;
receiving a second configuration, wherein the second configuration is used for changing the first time-domain unit in the transmission resource to a second time-domain unit; and
discarding the first transmission or performing the first transmission not using the transmission resource.

14. A transmission method, comprising:
determining a time-domain unit configured for a first transmission, wherein the time-domain unit comprises a first time-domain unit and a second time-domain unit.

15. The method of claim 14, wherein the first transmission is an uplink transmission;

the first time-domain unit is a time-domain unit containing an uplink sub-band, and the second time-domain unit is an uplink time-domain unit; or
the first time-domain unit is the uplink time-domain unit, and the second time-domain unit is the time-domain unit containing the uplink sub-band.

16. The method of claim 15, further comprising:

determining a transmission parameter for the uplink transmission, wherein the transmission parameter is determined based on the first time-domain unit, wherein
the transmission parameter comprises at least one of a time-domain resource, a frequency-domain resource, or a power parameter.

17. The method of claim 16, wherein a time-domain resource for the uplink transmission comprises the first time-domain unit.

18. The method of claim 15, further comprising:
determining a transmission parameter for the uplink transmission, wherein the transmission parameter is determined based on the first time-domain unit and the second time-domain unit, and the transmission parameter comprises at least one of a time-domain resource, a frequency-domain resource, or a power parameter.

19. The method of claim 18, wherein a time-domain resource for the uplink transmission comprises the first time-domain unit and the second time-domain unit.

20. The method of any one of claims 16 to 19, wherein a frequency-domain resource for the uplink transmission is determined based on the first time-domain unit.

21. The method of claim 20, wherein the frequency-domain resource for the uplink transmission is in a range of an uplink frequency-domain resource corresponding to the first time-domain unit and a frequency-domain resource allocated for the uplink transmission.

22. The method of any one of claims 16 to 19, wherein a power parameter for the uplink transmission is determined based on the first time-domain unit.

23. The method of claim 22, wherein the power parameter for the uplink transmission comprises at least one of:
a power parameter configured for the first time-domain unit; or a number of frequency-domain resources corresponding to the first time-domain unit.

24. The method of any one of claims 16 to 19, wherein a frequency-domain resource for the uplink transmission is determined based on each of time-domain units allocated for the uplink transmission.

25. The method of claim 24, wherein the frequency-domain resource for the uplink transmission is in a range of an uplink frequency-domain resource corresponding to each of the time-domain units and a frequency-domain resource allocated for the uplink transmission.

26. The method of any one of claims 16 to 19, wherein a power parameter for the uplink transmission is determined based on each time-domain unit allocated for the uplink transmission in the first time-domain unit and the second time-domain unit.

27. The method of claim 26, wherein the power parameter for the uplink transmission comprises at least one of:
a power parameter configured for said each time-domain unit; or a number of frequency-domain resources corresponding to said each time-domain unit.

28. The method of any one of claims 15 to 27, wherein the uplink transmission comprises at least one of:
a physical uplink control channel (PUCCH) transmission; a physical uplink shared channel (PUSCH) transmission; a PUCCH repetition; a PUSCH repetition; or a sounding reference signal (SRS).

29. The method of claim 14, wherein the first transmission is a downlink transmission;

the first time-domain unit is a time-domain unit containing a downlink sub-band, and the second time-domain unit is a downlink time-domain unit; or
the first time-domain unit is the downlink time-domain unit, and the second time-domain unit is the time-domain unit containing the downlink sub-band.

30. The method of claim 29, further comprising:

determining a transmission parameter for the downlink transmission, wherein the transmission parameter is determined based on the first time-domain unit, wherein
the transmission parameter comprises at least one of a time-domain resource, a frequency-domain resource, or a power parameter.

31. The method of claim 30, wherein a time-domain resource for the downlink transmission comprises the first time-domain unit.

32. The method of claim 29, further comprising:
determining a transmission parameter for the downlink transmission, wherein the transmission parameter is determined based on the first time-domain unit and the second time-domain unit, and the transmission parameter comprises at least one of a time-domain resource, a frequency-domain resource, or a power parameter.

33. The method of claim 32, wherein a time-domain resource for the downlink transmission comprises the first time-domain unit and the second time-domain unit.

34. The method of any one of claims 30 to 33, wherein a frequency-domain resource for the downlink transmission is determined based on the first time-domain unit.

35. The method of claim 34, wherein the frequency-domain resource for the downlink transmission is in a range of a downlink frequency-domain resource corresponding to the first time-domain unit and a frequency-domain resource allocated for the downlink transmission.

36. The method of any one of claims 30 to 33, wherein a frequency-domain resource for the downlink transmission is determined based on each of time-domain units allocated for the downlink transmission.

37. The method of claim 36, wherein the frequency-domain resource for the downlink transmission is in a range of a downlink frequency-domain resource corresponding to each of the time-domain units and a frequency-domain resource allocated for the downlink transmission.

38. The method of any one of claims 29 to 37, wherein the downlink transmission comprises at least one of:
a physical downlink control channel (PDCCH) transmission; a physical downlink shared channel (PDSCH) transmission; a PDCCH repetition; a PDSCH repetition; or a channel state information-reference signal (CSI-RS).

39. A transmission method, comprising:

determining a transmission parameter for a first transmission based on one or two types of time-domain unit configured for the first transmission, wherein
the time-domain unit is a time-domain unit in a transmission resource allocated for the first transmission, and the transmission parameter comprises at least one of a time-domain resource, a frequency-domain resource, or a power parameter.

40. A transmission apparatus, comprising:
a determining module configured to determine a time-domain unit configured for a first transmission, wherein the time-domain unit configured for the first transmission contains one type of time-domain unit.

41. A transmission apparatus, comprising:
a determining module configured to determine a time-domain unit configured for a first transmission, wherein the time-domain unit comprises a first time-domain unit and a second time-domain unit.

42. A transmission apparatus, comprising:

a determining module configured to determine a transmission parameter for a first transmission based on one or two types of time-domain unit configured for the first transmission, wherein
the time-domain unit is a time-domain unit in a transmission resource allocated for the first transmission, and the transmission parameter comprises at least one of a time-domain resource, a frequency-domain resource, or a power parameter.

43. A terminal, comprising:

a processor; and a transceiver coupled with the processor, wherein
the processor is configured to load and execute executable instructions to implement the transmission method of any one of claims 1 to 13, the transmission method of any one of claims 14 to 38, and the transmission method of claim 39.

44. A network device, comprising:

a processor; and a transceiver coupled with the processor, wherein
the processor is configured to load and execute executable instructions to implement the transmission method of any one of claims 1 to 12, the transmission method of any one of claims 14 to 38, and the transmission method of claim 39.

45. A chip, comprising programmable logic circuits and/or program instructions, wherein a communication device equipped with the chip is configured to, when running, implement the transmission method of any one of claims 1 to 13, the transmission method of any one of claims 14 to 38, and the transmission method of claim 39.

46. A computer-readable storage medium configured to store at least one program which is loaded and executed by a processor to implement the transmission method of any one of claims 1 to 13, the transmission method of any one of claims 14 to 38, and the transmission method of claim 39.

**47.** A computer program product, comprising at least one program, wherein the at least one program is stored in a computer-readable storage medium; and a processor of a communication device is configured to read the at least one program from the computer-readable storage medium, and the processor is configured to execute the at least one program, to cause the communication device to perform the transmission method of any one of claims 1 to 13, the transmission method of any one of claims 14 to 38, and the transmission method of claim 39.

FIG. 1

FIG. 2

START RB:
RB start

NUMBER OF RBs:
$L_{RBS}$

RB 0  RB 1  RB 2  RB 3  RB 4  RB 5  RB 6  RB 7  RB 8  RB 9  RB 10  RB 11  RB 12  RB 13  RB 14  RB 15  RB 16  RB 17

FIG. 3

NETWORK
DEVICE
120

UPLINK

DOWNLINK

TERMINAL
DEVICE
110

FIG. 4

DETERMINE TIME-DOMAIN UNIT CONFIGURED FOR FIRST
TRANSMISSION — 220

FIG. 5

DETERMINE TRANSMISSION PARAMETER FOR FIRST
TRANSMISSION — 240

FIG. 6

FIG. 7

FIG. 8

FIG. 9

FIG. 10

FIG. 11

FIG. 12

FIG. 13

FIG. 14

DETERMINE TIME-DOMAIN UNIT FOR FIRST TRANSMISSION          320

FIG. 15

DETERMINE TRANSMISSION PARAMETER FOR UPLINK TRANSMISSION          420

FIG. 16

| D | D | D | D | D | D | F | F | U | U | U | U | U | U |
|---|---|---|---|---|---|---|---|---|---|---|---|---|---|
| | | | | | | | | | | | | | |
| | | UPLINK SUB-BAND | | | | | | | | | | | |
| | | | | | | | | | | | | | |
| 0 | 1 | 2 | 3 | 4 | 5 | 6 | 7 | 8 | 9 | 10 | 11 | 12 | 13 |

SLOT

FIG. 17

DETERMINE THAT TIME-DOMAIN RESOURCE FOR UPLINK TRANSMISSION INCLUDES FIRST TIME-DOMAIN UNIT          4201

FIG. 18

FIG. 19

DETERMINE THAT TIME-DOMAIN RESOURCE FOR UPLINK TRANSMISSION INCLUDES FIRST TIME-DOMAIN UNIT AND SECOND TIME-DOMAIN UNIT — 4202

FIG. 20

D D D D D D F F U U U U U U

RB80

RB60

RB40

UPLINK
SUB-BAND

PUSCH

RB20

RB0

0 1 2 3 4 5 6 7 8 9 10 11 12 13

SLOT

FIG. 21

FREQUENCY-DOMAIN RESOURCE FOR UPLINK TRANSMISSION IS DETERMINED BASED ON FIRST TYPE OF TIME-DOMAIN UNIT — 4203

FIG. 22

FIG. 23

FREQUENCY-DOMAIN RESOURCE FOR UPLINK TRANSMISSION IS DETERMINED BASED ON EACH OF TIME-DOMAIN UNITS ALLOCATED FOR UPLINK TRANSMISSION — 4204

FIG. 24

UPLINK FREQUENCY-DOMAIN RESOURCE CORRESPONDING TO EACH TIME-DOMAIN UNIT IS DETERMINED BASED ON EACH TIME-DOMAIN UNIT FOR UPLINK TRANSMISSION — 42041

FREQUENCY-DOMAIN RESOURCE FOR UPLINK TRANSMISSION IS DETERMINED BASED ON INTERSECTION BETWEEN UPLINK FREQUENCY-DOMAIN RESOURCE ALLOCATED FOR EACH TIME-DOMAIN UNIT AND FREQUENCY-DOMAIN RESOURCE ALLOCATED FOR UPLINK TRANSMISSION — 42042

FIG. 25

POWER PARAMETER FOR UPLINK TRANSMISSION IS DETERMINED BASED ON FIRST TYPE OF TIME-DOMAIN UNIT — 4205

FIG. 26

| POWER PARAMETER FOR UPLINK TRANSMISSION IS DETERMINED BASED ON EACH TIME-DOMAIN UNIT ALLOCATED FOR UPLINK TRANSMISSION | 4206 |

FIG. 27

| DETERMINE TRANSMISSION PARAMETER FOR DOWNLINK TRANSMISSION | 520 |

FIG. 28

FIG. 29

DETERMINE THAT TIME-DOMAIN RESOURCE FOR DOWNLINK
TRANSMISSION INCLUDES FIRST TIME-DOMAIN UNIT

5201

FIG. 30

FIG. 31

DETERMINE THAT TIME-DOMAIN RESOURCE FOR DOWNLINK
TRANSMISSION INCLUDES FIRST TIME-DOMAIN UNIT AND
SECOND TIME-DOMAIN UNIT — 5202

FIG. 32

FIG. 33

| FREQUENCY-DOMAIN RESOURCE FOR DOWNLINK TRANSMISSION IS DETERMINED BASED ON FIRST TYPE OF TIME-DOMAIN UNIT | 5203 |

FIG. 34

FIG. 35

| FREQUENCY-DOMAIN RESOURCE FOR DOWNLINK TRANSMISSION IS DETERMINED BASED ON EACH OF TIME-DOMAIN UNITS ALLOCATED FOR DOWNLINK TRANSMISSION | 5204 |

FIG. 36

| DOWNLINK FREQUENCY-DOMAIN RESOURCE CORRESPONDING TO EACH TIME-DOMAIN UNIT IS DETERMINED BASED ON EACH TIME-DOMAIN UNIT FOR DOWNLINK TRANSMISSION | 52041 |

| FREQUENCY-DOMAIN RESOURCE FOR DOWNLINK TRANSMISSION IS DETERMINED BASED ON INTERSECTION BETWEEN DOWNLINK FREQUENCY-DOMAIN RESOURCE ALLOCATED FOR EACH TIME-DOMAIN UNIT AND FREQUENCY-DOMAIN RESOURCE ALLOCATED FOR DOWNLINK TRANSMISSION | 52042 |

FIG. 37

| DETERMINE TRANSMISSION PARAMETER FOR FIRST TRANSMISSION BASED ON ONE OR TWO TYPES OF TIME-DOMAIN UNIT CONFIGURED FOR FIRST TRANSMISSION | 620 |

FIG. 38

```
┌─────────────────┐
│  DETERMINING    │     3910
│    MODULE       │
└─────────────────┘

┌─────────────────┐
│   RECEIVING     │     3920
│    MODULE       │
└─────────────────┘

┌─────────────────┐
│ TRANSMITTING    │     3930
│    MODULE       │
└─────────────────┘
```

FIG. 39

```
┌─────────────────┐
│  DETERMINING    │     4010
│    MODULE       │
└─────────────────┘

┌─────────────────┐
│   RECEIVING     │     4020
│    MODULE       │
└─────────────────┘

┌─────────────────┐
│ TRANSMITTING    │     4030
│    MODULE       │
└─────────────────┘
```

FIG. 40

DETERMINING MODULE — 4110

RECEIVING MODULE — 4120

TRANSMITTING MODULE — 4130

FIG. 41

COMMUNICATION DEVICE 4200

FIG. 42

## INTERNATIONAL SEARCH REPORT

| International application No. |
|---|
| **PCT/CN2023/076307** |

**A. CLASSIFICATION OF SUBJECT MATTER**

H04W72/0446(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXT, ENTXTC, CNABS, WPABS, DWPI, IEEE, 3GPP: 第一, 仅, 上行, 时隙, 时域, 时域单元, 唯, 下行, 一种, 只, 子带, 子带全双工, SBFD, Sub Band Full Duplex, time domain unit, only, first, uplink, domain, kind, type, band

**C. DOCUMENTS CONSIDERED TO BE RELEVANT**

| Category* | Citation of document, with indication, where appropriate, of the relevant passages | Relevant to claim No. |
|---|---|---|
| X | CN 110710234 A (BEIJING XIAOMI MOBILE SOFTWARE CO., LTD.) 17 January 2020 (2020-01-17) description, paragraphs [0006]-[0008] and [0108]-[0175], and figure 5 | 1-47 |
| A | CN 111787614 A (CHINA ACADEMY OF INFORMATION AND COMMUNICATIONS TECHNOLOGY) 16 October 2020 (2020-10-16) entire document | 1-47 |
| A | CN 115175336 A (VIVO MOBILE COMMUNICATION CO., LTD.) 11 October 2022 (2022-10-11) entire document | 1-47 |
| A | WO 2022155934 A1 (HUAWEI TECHNOLOGIES CO., LTD.) 28 July 2022 (2022-07-28) entire document | 1-47 |
| A | CN 111066369 A (HUAWEI TECHNOLOGIES CO., LTD.) 24 April 2020 (2020-04-24) entire document | 1-47 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 October 2023** | **24 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/076307**

| Patent document cited in search report | | | Publication date (day/month/year) | Patent family member(s) | | | Publication date (day/month/year) |
|---|---|---|---|---|---|---|---|
| CN | 110710234 | A | 17 January 2020 | WO | 2021035576 | A1 | 04 March 2021 |
| CN | 111787614 | A | 16 October 2020 | WO | 2020199722 | A1 | 08 October 2020 |
| CN | 115175336 | A | 11 October 2022 | WO | 2022214013 | A1 | 13 October 2022 |
| WO | 2022155934 | A1 | 28 July 2022 | None | | | |
| CN | 111066369 | A | 24 April 2020 | WO | 2019061366 | A1 | 04 April 2019 |

Form PCT/ISA/210 (patent family annex) (July 2022)